# EUROPEAN PATENT SPECIFICATION

(11) **EP 3 121 696 B1**
(45) Date of publication and mention of the grant of the patent: **13.09.2023**
(21) Application number: 14886116.4
(22) Date of filing: 17.11.2014
(51) Int. Cl.: G06F 3/045, G06F 3/041

(54) **TOUCH PANEL, INPUT APPARATUS, REMOTE CONTROL APPARATUS, AND TOUCH PANEL MANUFACTURING METHOD**
BERÜHRUNGSFELD, EINGABEVORRICHTUNG, FERNSTEUERUNG UND VERFAHREN ZUR HERSTELLUNG EINES BERÜHRUNGSFELDES
PANNEAU TACTILE, APPAREIL D'ENTRÉE, APPAREIL DE COMMANDE À DISTANCE, ET PROCÉDÉ DE FABRICATION DE PANNEAU TACTILE

(30) Priority: 18.03.2014 WO PCT/JP2014/057370
(43) Date of publication of application: 25.01.2017
(73) Proprietor: Mitsubishi Electric Corporation, Chiyoda-ku Tokyo 100-8310 (JP)
(72) Inventor: KOIZUMI Yoshiaki, Tokyo 100-8310 (JP)
(74) Representative: Pfenning, Meinig & Partner mbB
(86) International application number: PCT/JP2014/080374
(87) International publication number: WO 2015/141058

(56) References cited:
- EP-A1- 2 234 134
- WO-A1-2011/019482
- JP-A- S6 293 818
- JP-A- H11 194 872
- JP-A- 2005 117 161
- JP-A- 2010 182 286
- US-A1- 2006 238 517

## Description

### Technical Field

The present disclosure relates to a touch panel, an input device, a remote control device, and a touch panel manufacturing method.

### Background Art

Touch panels are commonly used in input devices for various appliances, such as mobile terminals. Patent Literature 1, for example, discloses a resistive touch panel including transparent electrode substrates having transparent conductive films of indium tin oxide (ITO) or the like, with the transparent electrode substrates vertically opposing each other via a gap therebetween and fixed at outer frame portions thereof. As disclosed in Patent Literature 1, depression positions on such a resistive touch panel, for example of a four-wire type, are detected with two parallel wires disposed on each of upper and lower substrates to alternately form a potential distribution in an X direction in one of the substrates and a potential distribution in a Y direction in the other of the substrates so that application of the potential distribution and detection of the electric potential are alternately performed on each of the upper and lower substrates.

Patent Literature 2 discloses a quantum tunneling composite material, or other material exhibiting changing electrical or magnetic properties as force on the material is increased, which is located within a force concentrator to sense force applied on a touch screen.

The force-sensitive material can be optionally pre-loaded so as to operate within a substantially linear feedback range. A sensing mechanism can be configured to detect changes in force at multiple locations or to detect the application of force irrespective of location.

In Patent Literature 3 an electronic device has a display and has a touch sensitive bezel surrounding the display. Areas on the bezel are designated for controls used to operate the electronic device. Visual guides corresponding to the controls are displayed on the display adjacent the areas of the bezel designated for the controls. The device determines which of the controls has been selected based on which designated area is associated with touch data from the bezel. The device then initiates the determined control. The device can have a sensor for determining the orientation of the device. Based on the orientation, the device can alter the areas designated on the bezel for the controls and can alter the location of the visual guides for the display so that they match the altered areas on the bezel.

### Citation List

### Patent Literature

Patent Literature 1: Unexamined Japanese Patent Application Kokai Publication No. 2012-221006
Patent Literature 2: WO 2011 / 019482 A1
Patent Literature 3: US 2006 / 0238517 A1

### Summary of Invention

### Technical Problem

In the touch panel as disclosed in Patent Literature 1, transparent conductive films are disposed on the respective upper and lower transparent electrode substrates, and then two parallel wires are disposed on each of the transparent conductive films. The touch panel itself has thus a complicated structure.

In addition, the depression positions on such a touch panel are detected by alternately forming potential distributions between the parallel wires of the upper and lower substrates. Thus, in many cases, the structure for detection of the depression positions is also complicated.

The present disclosure has been made in view of the foregoing, and an objective of the present disclosure is to provide a touch panel or the like with a simple structure that enables detection of a pressed area.

### Solution to Problem

To achieve the foregoing objective, a touch panel according to claim 1 and a method for manufacturing the touch panel according to claim 9 is provided.

### Advantageous Effects of Invention

According to the present disclosure, the structure of the touch panel itself is simplified because it is sufficient that the first conductive path is disposed on the first sheet and the second conductive path and the pressure-detecting conductive path are disposed on the second sheet. Thus, detection of the pressed pressure-sensing area is enabled with this simple structure.

### Brief Description of Drawings

FIG. 1 is a front view of a remote control device;
FIG. 2 is an exploded perspective view of a touch panel;
FIG. 3 is a front view of the touch panel;
FIG. 4 is a rear perspective view of an internal structure of the remote control device;
FIG. 5 is a diagram illustrating functions of a microcomputer included in the remote control device;
FIG. 6 is a diagram illustrating an example of control content data;
FIG. 7 is a diagram illustrating an example of a control process performed by the remote control device;
FIG. 8 is a cross-sectional view taken along lines B-B in an area A-A of FIG. 3 with a pressure-sensing area not pressed;
FIG. 9 is a cross-sectional view taken along the lines B-B in the area A-A of FIG. 3 with the pressure-sensing area pressed;
FIG. 10 is a diagram illustrating an example of an electric circuit formed by a first conductive path, a second conductive path, and a pressure-detecting conductive path, upon the pressing of the pressure-sensing area as illustrated in FIG. 9;
FIG. 11 illustrates an example of a changed image caused by the pressing of the pressure-sensing area as illustrated in FIG. 9;
FIG. 12 illustrates an example of a process of disposing the first conductive path and spacers on a first sheet;
FIG. 13 illustrates an example of a process of disposing the second conductive path on a second sheet;
FIG. 14 is a front view of a touch panel;
FIG. 15 is a front view of a touch panel;
FIG. 16 is a front view of a touch panel;
FIG. 17 is a front view of a lower portion of a touch panel;
FIG. 18 is a front view of a touch panel;
FIG. 19 is a front view of a touch panel;
FIG. 20 is an exploded perspective view of a touch panel according to an embodiment of the present disclosure;
FIG. 21 is a front view of the touch panel according to Fig. 20;
FIG. 22 is a cross-sectional view taken along lines D-D in an area C-C of FIG. 21 with a pressure-sensing area not pressed;
FIG. 23 is a cross-sectional view taken along the lines D-D in the area C-C of FIG. 21 with the pressure-sensing area pressed;
FIG. 24 is a diagram illustrating another example of an electric circuit formed by a first conductive path, a second conductive path, and a pressure-detecting conductive path upon the pressing of the pressure-sensing area as illustrated in FIG. 23;
FIG. 25 illustrates an example of a process of disposing the first conductive path, a spacer, a pressure-detecting auxiliary conductive path on the first sheet according to Fig. 20;
FIG. 26 is a diagram illustrating a first variation of the pressure-detecting auxiliary conductive path;
FIG. 27 is a diagram illustrating a second variation of the pressure-detecting auxiliary conductive path;
FIG. 28 is a diagram illustrating a third variation of the pressure-detecting auxiliary conductive path;
FIG. 29 is a front view of a touch panel according to an embodiment of the present disclosure; and
FIG. 30 is a front view of a touch panel according to Fig. 29.

### Description of Examples and Embodiments

Examples and embodiments of the present disclosure are described with reference to the drawings. The same reference numerals denote the same elements throughout the drawings. In the drawings, a thin dotted line represents a hidden line and a thin dashed double-dotted line represents a phantom line.

### Example 1

The example 1 is not an embodiment of the present invention falling under the scope of the appended claims but helpful to understand certain aspects thereof.

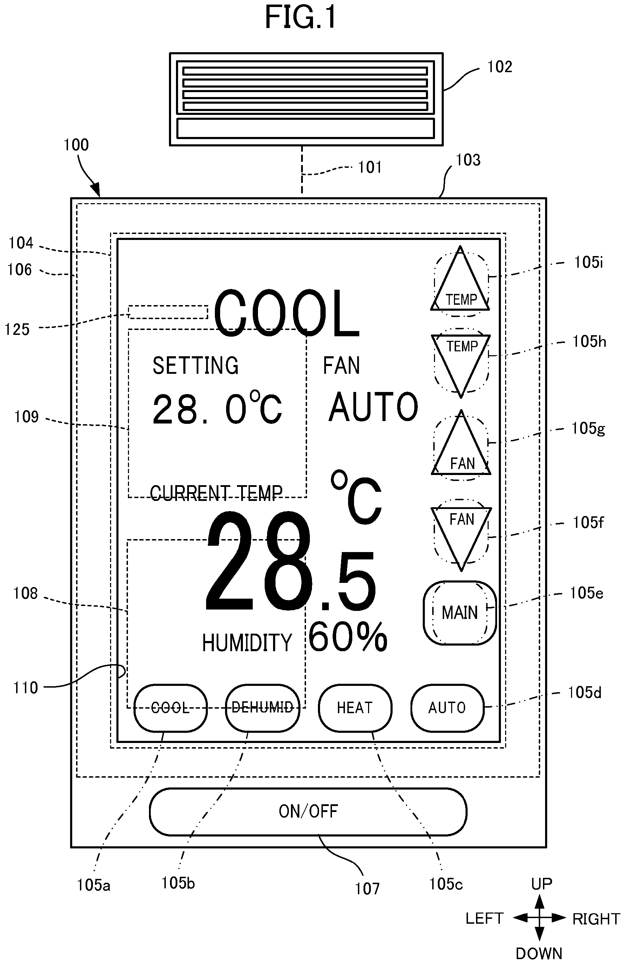

A remote control device 100 according to Embodiment 1 of the present disclosure is a device for controlling an air-conditioner 102 by communicating with the air-conditioner 102 via a connection 101, as illustrated in FIG. 1, which is a front view of the remote control device 100. The connection 101 may be wireless, wired, or a combination thereof, and any communication standard may be employed.

The remote control device 100 includes, as illustrated in FIG. 1, a cover 103 for enclosing various parts, a display 104 for presenting an image forward, a touch panel 106 for receiving an operation in which a user presses pressure-sensing areas 105a to 105i, a power button 107 for switching on and off the air-conditioner 102, a power source 108 for providing power for the operation of the remote control device 100, and a microcomputer 109 for controlling the operation of the remote control device 100. The pressure-sensing areas 105a to 105i are typically pressed with a user's finger, but may be pressed with a pen-shaped instrument or the like.

With respect to the plane of the page of FIG. 1, the direction of the term "forward" or "front" is defined as facing the viewer and the term "back" or "behind" is defined as facing away from the viewer.

The cover 103 has a generally rectangular opening 110 in the front portion. An image on the display 104 is presented forward through the opening 110, and a user operation to the touch panel 106 is receivable.

The display 104 includes a screen for displaying an image and a frame surrounding the screen. The screen of the display 104 typically has a rectangular shape and is disposed to be aligned with the opening 110 of the cover 103, as illustrated in FIG. 1. The display 104 may be, for example, a full-dot color liquid-crystal display panel, and includes a liquid crystal panel, a drive circuit for driving liquid crystals, a color filter, a light source, and the like. Any display panel may be employed for the display 104, and the display 104 may be, for example, a monochrome liquid-crystal display panel, a segmented liquid-crystal display panel, or the like.

The touch panel 106 is a sheet-like member disposed in front of the screen of the display 104. As illustrated in FIG. 1, the images to be displayed on the display 104 appear in the pressure-sensing areas 105a to 105i, and the images each indicate a processing to be executed when the corresponding one of the pressure-sensing areas 105a to 105i is pressed. This enables intuitive user operations.

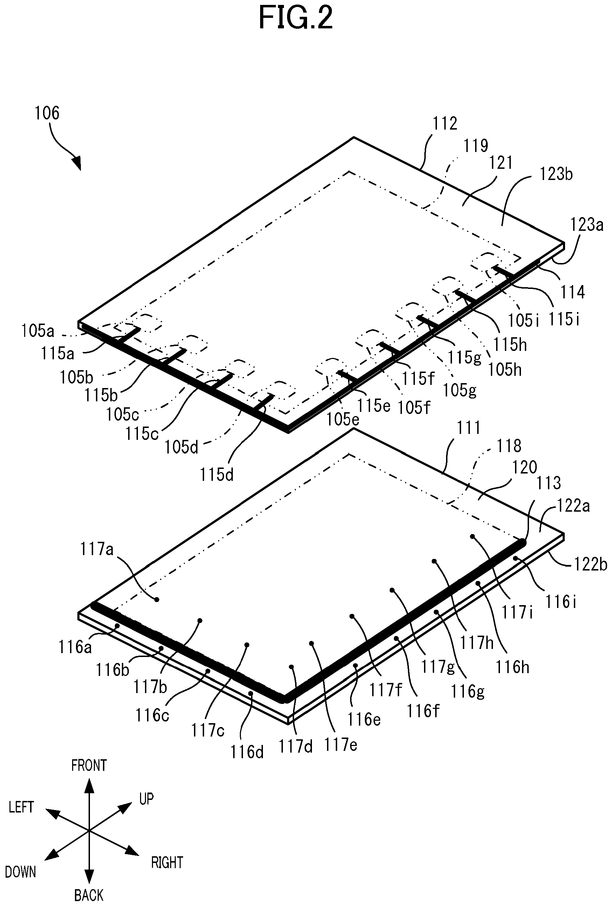

Specifically, as illustrated in FIG. 2, which is an exploded perspective view of the touch panel 106, the touch panel 106 includes a first sheet 111 and a second sheet 112 opposing each other with a gap therebetween, a first conductive path 113 formed on the first sheet 111, a second conductive path 114 formed on the second sheet 112, pressure-detecting conductive paths 115a to 115i for detecting which of the pressure-sensing areas 105a to 105i is pressed, and spacers 116a to 116i and 117a to 117i disposed between the first sheet 111 and the second sheet 112 to maintain the gap therebetween.

Since the first sheet 111 and the second sheet 112 are disposed in a front-back direction to oppose each other, the direction perpendicular to the first sheet 111 is oriented in the front-back direction and is the same as the direction perpendicular to the second sheet 112. That is, the phrase "as viewed from the front" as used in the description of the present example corresponds to the phrase "as viewed in the direction perpendicular to the first sheet 111".

The first sheet 111 and the second sheet 112 each are a thin or extremely thin sheet-like transparent member, which is made of resin, for example, polyethylene terephthalate (PET) resin or the like. In the present example the first sheet 111 and the second sheet 112 both have the same size rectangular shape as viewed from the front.

The first sheet 111 and the second sheet 112 include respective image transmission areas 118 and 119 previously determined as areas where the screen of the display 104 is positioned to be associated with the image transmission areas 118 and 119, and respective surrounding areas 120 and 121 outside the image transmission areas 118 and 119. In the present example, the image transmission area 118 and the image transmission area 119 have the same size rectangular shape as viewed from the front.

More specifically, the first sheet 111 includes two main surfaces (a first main surface 122a and a third main surface 122b), which form the front and rear sides of the first sheet 111. Likewise, the second sheet 112 includes two main surfaces (a second main surface 123a and a fourth main surface 123b), which form the front and rear sides of the second sheet 112.

The first main surface 122a and the second main surface 123a are disposed to oppose each other so that the image transmission area 118 of the first sheet 111 and the image transmission area 119 of the second sheet 112 are aligned with each other in the front-back direction. In the present example, the screen of the display 104 is disposed behind the third main surface 122b. The image displayed on the display 104 is thus presented forward, passing through the image transmission areas 118 and 119 in this order.

The fourth main surface 123b, which is the front surface of the remote control device 100, includes the pressure-sensing areas 105a to 105i predefined inside the image transmission area 119 along the outer edge of the image transmission area 119, as illustrated in FIG. 2. In the present example, the pressure-sensing areas 105a to 105i are arranged in a row along the lower side and the right side of the image transmission area 119, as illustrated therein.

The first conductive path 113 is an electrically conductive portion formed on the first main surface 122a and extending continuously in linear or strip-like form. The first conductive path 113 in the present example is provided on the outer edge of the image transmission area 118 of the first sheet 111. More specifically, the first conductive path 113 is provided on the lower side and the right side that make up a portion of the outer edge of the image transmission area 118.

The second conductive path 114 is an electrically conductive portion formed on the second main surface 123a and extending continuously in linear or strip-like form. The second conductive path 114 in the present example is provided in the surrounding area 121 of the second main surface 123a, as illustrated in FIG. 2.

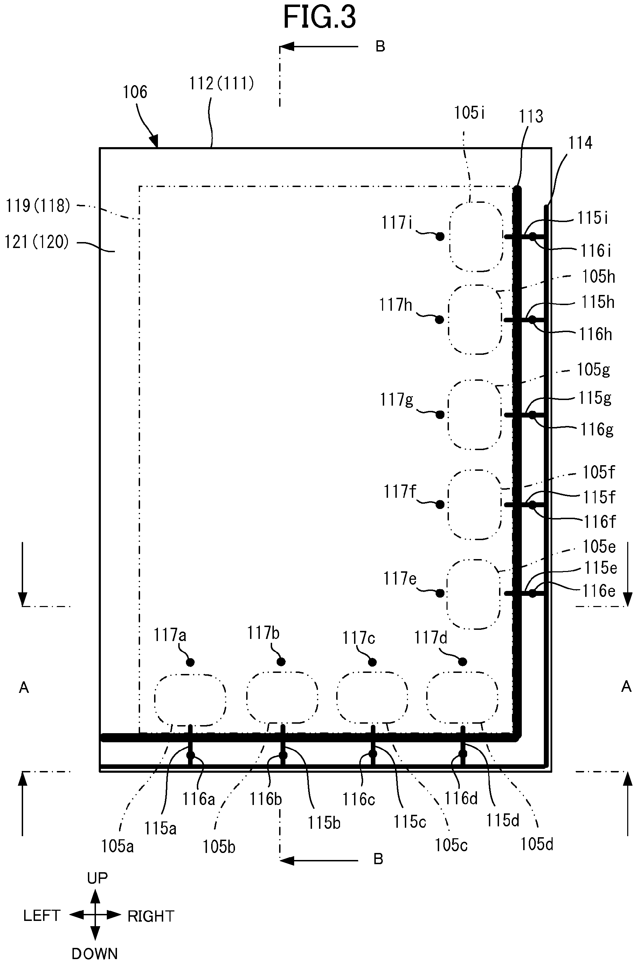

More specifically, as illustrated in FIG. 3, which is a front view of the touch panel 106, the second conductive path 114 is provided in a lower portion of the surrounding area 121, which is located below and parallel to the lower side of the outer edge of the image transmission area 119, and is provided in a right portion of the surrounding area 121, which is located to the right of and parallel to the right side of the outer edge of the image transmission area 119. Thus, as viewed from the front, the second conductive path 114 is further spaced apart from the image transmission areas 118 and 119 than the first conductive path 113. The first conductive path 113 and the second conductive path 114 are parallel to each other as viewed from the front.

Here, the first conductive path 113 and the second conductive path 114 being parallel to each other means that a distance between the first conductive path 113 and the second conductive path 114 is substantially constant in a direction perpendicular to the direction parallel to the outer edge of the image transmission areas 118 and 119 as viewed from the front.

The pressure-detecting conductive paths 115a to 115i are electrically conductive portions formed on the second main surface 123a in linear or strip-like form in order to detect which of the pressure-sensing areas 105a to 105i is pressed. The pressure-detecting conductive paths 115a to 115i are provided in association with the respective pressure-sensing areas 105a to 105i.

The pressure-detecting conductive paths 115a to 115i are, as illustrated in FIG. 3, provided along the lower side and the right side of the outer edge of the image transmission area 118 and 119, and are parallel to each other with substantially equal distances. The pressure-detecting conductive paths 115a to 115i are each electrically connected, at one end thereof, to the second conductive path 114 at different positions, and intersect the first conductive path 113 as viewed from the front.

The first conductive path 113, the second conductive path 114, and the pressure-detecting conductive paths 115a to 115i as described above are formed from conductive ink including, for example, silver or the like. Printing of the conductive ink enables easy formation of the first conductive path 113, the second conductive path 114 and the pressure-detecting conductive paths 115a to 115i. In addition, relatively low cost of the conductive ink leads to reduction in manufacturing costs.

The spacers 116a to 116i and 117a to 117i are provided between the first sheet 111 and the second sheet 112. Each of the spacers 116a to 116i and 117a to 117i is an extremely small transparent spherical particle, which is made of resin or the like.

The spacers 116a to 116i are disposed between the first conductive path 113 and the second conductive path 114 so that the spacers 116a to 116i and the corresponding pressure-detecting conductive paths 115a to 115i overlap, as viewed from the front as illustrated in FIG. 3. The spacers 116a to 116i maintain the gap between the pressure-detecting conductive paths 115a to 115i and the first conductive path 113. This reliably prevents the pressure-detecting conductive paths 115a to 115i from making electrical contact with the first conductive paths 113 while none of the pressure-sensing areas 105a to 105i are pressed.

The spacers 117a to 117i are each disposed inside the image transmission areas 118 and 119 at a position located along a line extending from the corresponding pressure-detecting conductive path of the pressure-detecting conductive paths 115a to 115i as viewed from the front as illustrated in FIG. 3. The pressure-sensing areas 105a to 105i are each defined between the portion in which the corresponding one of the spacers 117a to 117i is provided and the first conductive path 113 as viewed from the front.

With the pressure-sensing areas 105a to 105i not pressed, the spacers 117a to 117i keep, in the pressure-sensing areas 105a to 105 i, a gap between the first sheet 111 and the second sheet 112 opposing each other in the front-back direction. When any of the pressure-sensing areas 105a to 105i is pressed, one of the pressure-detecting conductive paths 115a to 115i corresponding to the pressed one of the pressure-sensing areas 105a to 105i reliably flexes together with the second sheet 112, thereby enabling an electrical contact with the first conductive path 113.

Such arrangement of the spacers 116a to 116i and 117a to 117i maintains the gap between the first sheet 111 and the second sheet 112 with the pressure-sensing areas 105a to 105i not pressed. The length of the gap in the front-back direction is set such that when any of the pressure-sensing areas 105a to 105i is pressed and the second sheet 112 thereby flexes, one of the pressure-detecting conductive paths 115a to 115i corresponding to the pressed one of the pressure-sensing areas 105a to 105i is in contact with the first conductive path 113.

The power button 107 is a button provided below the opening 110 in the front portion of the cover 103, as illustrated in FIG. 1. Each time a user depresses the power button 107, the air-conditioner 102 is turned on or off under control of the microcomputer 109.

Here, the "turn-on" of the air-conditioner 102 denotes an operation state in which the air-conditioner 102 operates to condition the air within a target space. The "turn-off" of the air-conditioner 102 denotes a standby state in which the air-conditioner 102 waits for an instruction to start the operation, that is, an instruction output by the microcomputer 109 upon the depression of the power button 107.

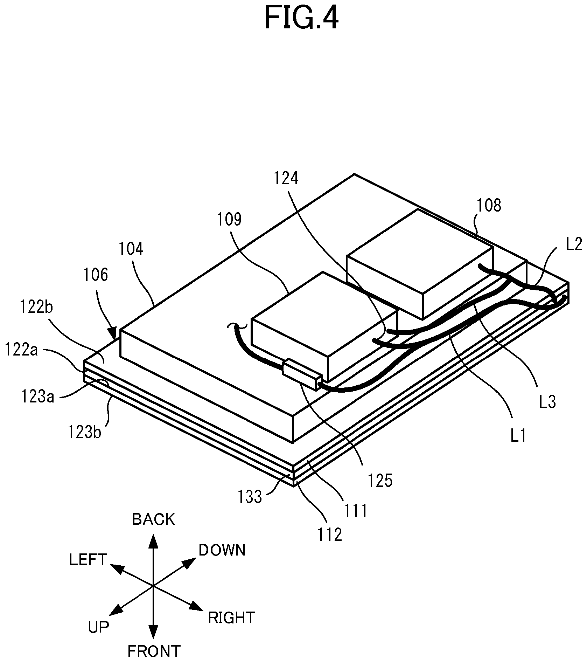

The microcomputer 109 is disposed behind the display 104, for example as illustrated in FIG. 4, and is enclosed within the cover 103. As illustrated therein, the microcomputer 109 has an analog/digital (A/D) input port 124 to which an end of the second conductive path 114 (the left end in the present example) is connected by a wire L1. The wire L1 branches off between the second conductive path 114 and the A/D input port 124 and is grounded (connected to a reference voltage) through a resistor 125.

The microcomputer 109 is a device for controlling the display 104, the air-conditioner 102, and the like in accordance with input signals. Physical components of the microcomputer 109 include, for example, a processing unit for performing various arithmetic operations, a register for storing instructions, information, and the like, and memory for storing data.

The input signals include a signal from the power button 107 in response to a user depression thereof, a signal from the touch panel 106 in response to a user press thereof, a signal including environment information provided by various sensors (unillustrated), and the like. The environment information may be, for example, temperature measured by a temperature sensor, humidity measured by a humidity sensor, information about human presence or absence detected by a human presence sensor, or the like.

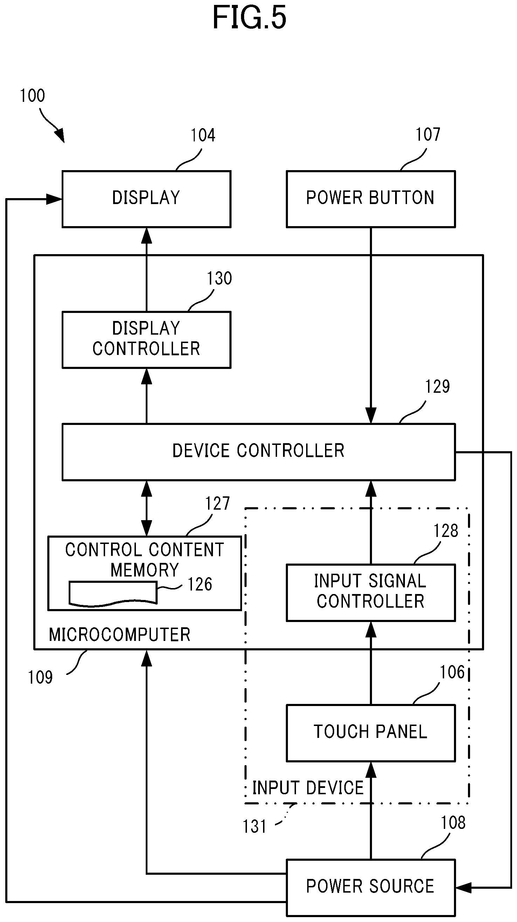

As illustrated in FIG. 5, the microcomputer 109 according to the present example functionally includes control content memory 127 for storing control content data 126 to be previously stored therein, an input signal controller 128 for determining, based on the input signal from the touch panel 106, which of the pressure-sensing areas 105a to 105i is pressed, a device controller 129 for controlling the air-conditioner 102 based on the pressed one of the pressure-sensing areas 105a to 105i, and a display controller 130 for displaying an image on the display 104. These functions are implemented, for example, by the microcomputer 109 executing pre-loaded programs.

The control content data 126 defines control content corresponding to the pressed one of the pressure-sensing areas 105a to 105i. The control content, as an example, includes controls to one or both of the air-conditioner 102 and the remote control device 100. Control of the remote control device 100, for example, includes a change of an image displayed on the display 104, and the like.

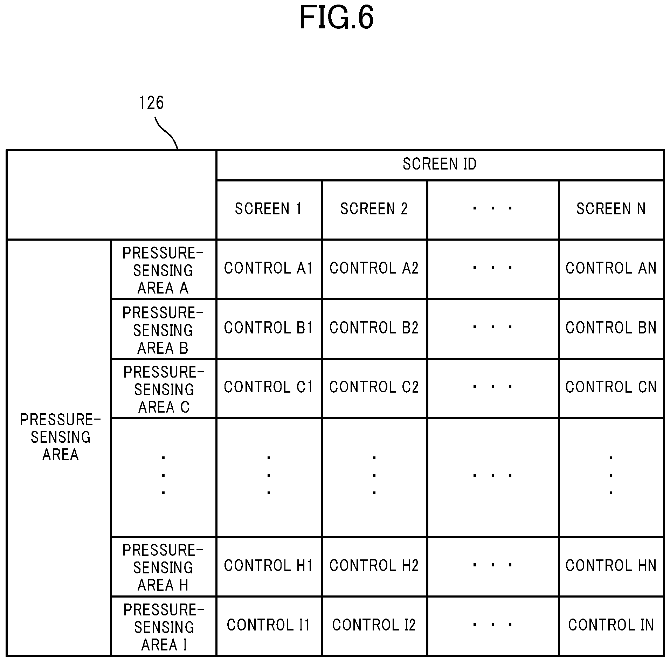

Each item of the control content data 126 according to the present example includes control content associated with a combination of the pressure-sensing areas 105a to 105i and screen IDs, as illustrated in FIG. 6. The screen ID is information for identification of an image that is displayed on the screen of the display 104. For example, when a "pressure-sensing area b" is pressed while the image having a "screen ID" that is a "screen 1" is displayed, the microcomputer 109 controls one or both of the air-conditioner 102 and the remote control device 100 in accordance with a "control content B1".

The input signal controller 128 determines which of the pressure-sensing areas 105a to 105i is pressed, based on a resistance value of an electric circuit formed upon the pressing of any of the pressure-sensing areas 105a to 105i. Such an input signal controller 128, together with the touch panel 106, forms an input device 131 for accepting a user input operation to the remote control device 100.

Specifically, upon the pressing of any of the pressure-sensing areas 105a to 105i, the first conductive path 113 makes an electrical contact with any of the pressure-detecting conductive paths 115a to 115i corresponding to the pressed one of the pressure-sensing areas 105a to 105i. The electric circuit is thereby formed by the first conductive path 113, the second conductive path 114, and one of the pressure-detecting conductive paths 115a to 115i corresponding to the pressed one of the pressure-sensing areas 105a to 105i. The input signal controller 128 determines a resistance value of the electric circuit formed upon the pressing, based on a voltage value of the input signal that is input to the A/D input port 124. Then, the input signal controller 128 determines which of the pressure-sensing areas 105a to 105i is pressed, based on the resistance value of that electric circuit.

The device controller 129 controls any one or more of the air-conditioner 102, the remote control device 100, and the like, based on the one of the pressure-sensing areas 105a to 105i determined by the input signal controller 128 and based on the control content data 126.

The display controller 130 displays an image on the display 104 under the instruction of the device controller 129.

The microcomputer 109 installed in the remote control device 100 is not limited to a single microcomputer, and a processor for controlling the display 104 may be, for example, additionally mounted thereon. In addition to or alternatively to the memory of the microcomputer 109, a memory device such as relatively large-capacity flash memory may be mounted on the remote control device 100.

The power source 108 is typically a device for conversion of commercial power, but may be a battery or the like. The power source 108 may be provided in the remote control device 100 as appropriate, and for example, is provided behind the display 104 inside the cover 103, as illustrated in FIG. 4, which is a rear perspective view of the remote control device 100.

The power source 108 supplies, to the touch panel 106, DC power for the operation. In the present example, as illustrated therein, the power source 108 is connected to an end of the first conductive path 113 (the left end in the present example) by a wire L2. A voltage having a predetermined magnitude (for example, 5.0 V) is applied via the wire L2 to the first conductive path 113.

The power source 108 supplies, to the microcomputer 109, DC power for the operation. In the present example, as illustrated therein, power from the power source 108 is supplied to the microcomputer 109 via a wire L3, which branches off from the wire L2. Thus the microcomputer 109 is supplied with power having the same magnitude as the first conductive path 113 (for example, 5.0 V DC power).

Since the touch panel 106 and the microcomputer 109 both operate on power supplied from the same power source 108, the need for a separate power source 108 for each of the touch panel 106 and the microcomputer 109 is thus eliminated. This avoids increasing the size of the input device 131 and in turn the size of the remote control device 100.

In the present example, the voltage is applied to the first conductive path 113, and the second conductive path 114 is connected to the A/D input port 124 and grounded through the resistor 125. However, the first conductive path 113 may be connected to the A/D input port 124 and grounded through the resistor 125, and a predetermined magnitude of voltage may be applied to the second conductive path 114.

In the foregoing description, the structure of the remote control device 100 according to the present example is described. Hereinafter the operation of the remote control device 100 according to the present example is described.

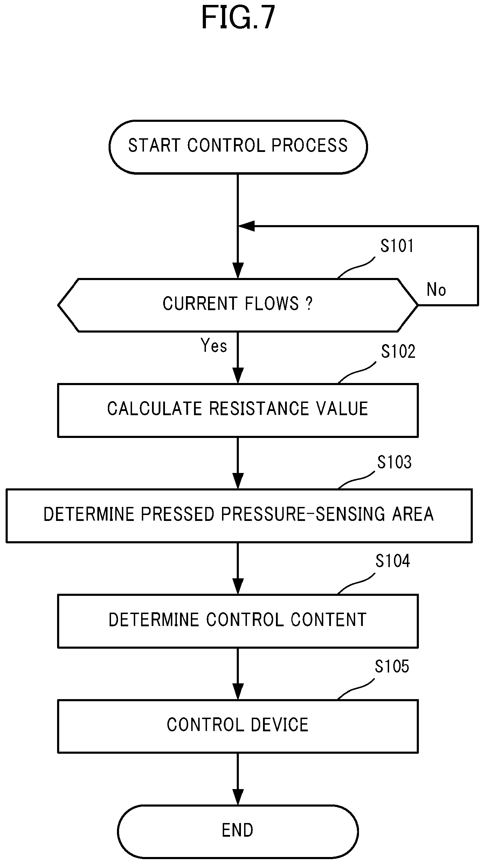

The remote control device 100 performs a control process as illustrated in FIG. 7 in the operation state. It is assumed here that the image as illustrated in FIG. 1 is initially displayed.

The image displayed on the remote control device 100 as illustrated in FIG. 1 indicates the following. The air-conditioner 102 is in operation under "SETTING: 28.0 °C", "FAN: AUTO", and "COOL". The pressure-sensing areas 105a to 105d are respectively associated with a function of switching the operation mode into the "COOL" mode, "DEHUMIDIFY" mode, "HEAT" mode, or "AUTO" mode. The pressure-sensing area 105e is associated with a function of switching the image to a predetermined "MAIN" image. The pressure-sensing area 105f is associated with airflow switching in an order (for example, in the order of "AUTO", "HIGH", "LOW", "VERY LOW"), and the pressure-sensing area 105g is associated with the airflow switching in the reverse order. The pressure-sensing area 105h is associated with reducing the temperature setting in predetermined decrements (e.g., 0.5 °C), and the pressure-sensing area 105i is associated with increasing the temperature setting in predetermined increments (e.g., 0.5 °C).

The input signal controller 128 determines, based on an input signal to the A/D input port 124, whether current flows in the second conductive path 114 (step S101).

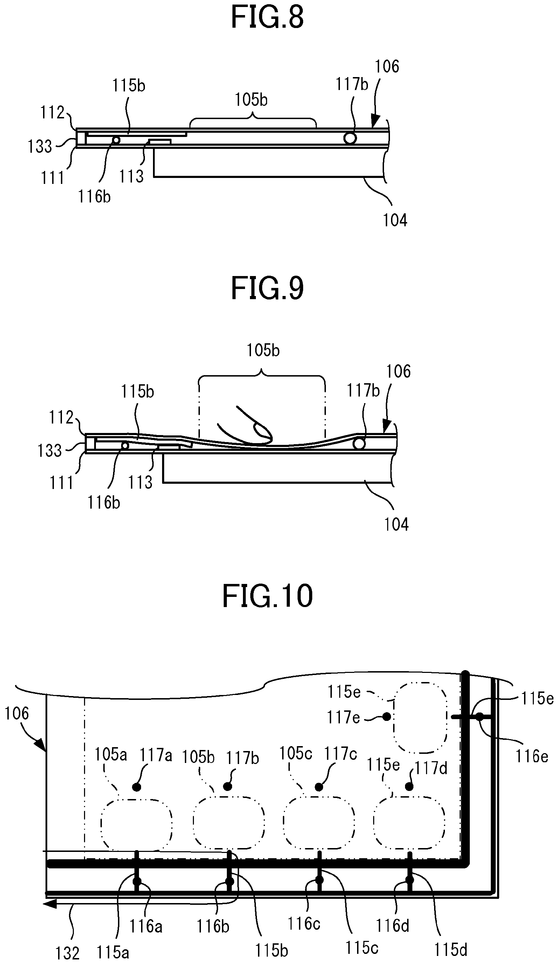

For example, as illustrated in FIG. 8, the pressure-detecting conductive path 115b corresponding to the pressure-sensing area 105b is spaced apart from the first conductive path 113. In this manner, when none of the pressure-sensing areas 105a to 105i are pressed, all the pressure-detecting conductive paths 115a to 115i are spaced apart from the first conductive path 113. Thus the pressure-detecting conductive paths 115a to 115i are insulated to the first conductive path 113 (that is, the resistance therebetween is infinite), and the current flowing in the second conductive path 114 is approximately zero.

Hence, the input signal to the A/D input port 124 is not substantially input when none of the pressure-sensing areas 105a to 105i are pressed. Here, even if the input signal is input to the A/D input port 124, the voltage of the input signal is a very weak subthreshold noise. The input signal controller 128 compares a threshold with the voltage of the input signal to the A/D input port 124, and for example, determines that no current flows in the second conductive path 114 when the voltage is equal to or less than the threshold.

For example, as illustrated in FIG. 9, when the pressure-sensing area 105b is pressed, the second sheet 112 flexes, which makes electrical connection between the first conductive path 113 and the pressure-detecting conductive path 115b associated with the pressure-sensing area 105b. The first conductive path 113, the pressure-detecting conductive path 115b, and the second conductive path 114 thereby form an electric circuit to cause a current flow in the electric circuit as indicated by an arrow 132 in FIG. 10. Thus the current flows through the electric circuit formed upon the pressing of the pressure-sensing area 105b, and then the input signal is input to the A/D input port 124.

Similarly, when any of the pressure-sensing areas 105a, 105c to 105i is pressed, one of the pressure-detecting conductive paths 115a, 115c to 115i corresponding to the pressed one of the pressure-sensing areas 105a, 105c to 105i electrically connects to the first conductive path 113. An electric circuit is thereby formed by the first conductive path 113, one of the pressure-detecting conductive paths 115a, 115c to 115i corresponding to the pressed one of the pressure-sensing areas 105a, 105c to 105i, and the second conductive path 114. Thus the current flows through the electric circuit formed upon the pressing of any of the pressure-sensing areas 105a, 105c to 105i, and the input signal is input to the A/D input port 124.

Accordingly, when any of the pressure-sensing areas 105a to 105i is pressed, the input signal is input to the A/D input port 124. The input signal controller 128 compares a threshold with the voltage of the input signal to the A/D input port 124, and for example, determines that current flows in the second conductive path 114 when the voltage is greater than the threshold.

When the input signal controller 128 determines that no current flows (NO in step S101), the input signal controller 128 repeats step S101.

When the input signal controller 128 determines that current flows (YES in step S101), the input signal controller 128 calculates a resistance value based on the voltage value of the input signal to the A/D input port 124 and a magnitude of the previously applied voltage (step S102).

Specifically, as described above with reference to FIG. 4, the predetermined magnitude of the voltage is applied to the first conductive path 113 through the wire L2. The voltage applied to the first conductive path 113 is divided into a voltage across resistance (interconnection resistance) of the electric circuit formed upon the pressing and a voltage across the resistor 125. The resistance value of the resistor 125 may be determined as appropriate in terms of design. Accordingly, the input signal controller 128 can calculate a resistance value of the electric circuit corresponding to the pressed one of the pressure-sensing areas 105a to 105i based on the voltage value of the input signal to the A/D input port 124 and the voltage value applied to the first conductive path 113.

In step S102, the input signal controller 128 thus determines, for example when the pressure-sensing area 105b is pressed, the resistance value of the electric circuit formed upon the pressing of the pressure-sensing area 105b.

The input signal controller 128 determines (step S103) which of the pressure-sensing areas 105a to 105i is pressed, based on the resistance value calculated in step S102.

Here, as described above, the first conductive path 113 and the second conductive path 114 extend along the outer edges of the image transmission areas 118 and 119. The voltage is applied to one end of the first conductive path 113, and the current flowing from one end of the second conductive path 114 located adjacent to the one end of the first conductive path 113 is input to the A/D input port 124 as the input signal.

When any of the pressure-sensing areas 105a to 105i is pressed, one of the pressure-detecting conductive paths 115a to 115i corresponding to the pressed pressure-sensing area is electrically connected to the first conductive path 113. Thus the length of the electric circuit formed upon the pressing of any of the pressure-sensing areas 105a to 105i varies depending on which of the pressure-sensing areas 105a to 105i is pressed. This electric circuit is formed by the one of the pressure-detecting conductive paths 115a to 115i corresponding to the pressed one of the pressure-sensing areas 105a to 105i, the first conductive path 113, and the second conductive path 114.

Accordingly, the resistance values calculated in step S102 vary depending on which of the pressure-sensing areas 105a to 105i is pressed.

For example, the input signal controller 128 may previously store data including each of the pressure-sensing areas 105a to 105i and the resistance values in association with each other. The input signal controller 128 may determine the pressed one of the pressure-sensing areas 105a to 105i based on the data and the resistance value calculated in step S102. The resistance values included in the data and associated with the respective pressure-sensing areas 105a to 105i may be set to have a range such as a range from X1 [Ω] to X2 [Ω] since some error is tolerable.

The device controller 129 acquires data indicating one of the pressure-sensing areas 105a to 105i determined in step S103. The device controller 129 identifies a screen ID of the image being displayed on the display 104. The screen ID of the image being displayed may be stored, for example, in the device controller 129 itself. The device controller 129 determines the control content based on the pressure-sensing areas 105a to 105i indicated by the acquired data, the identified screen ID, and the control content data 126 (step S104).

For example, when "SCREEN ID" of the image illustrated in FIG. 1 is "SCREEN 1" and "PRESSURE-SENSING AREA B" is pressed, the device controller 129 determines the control content, that is, "CONTROL CONTENT B1", by referring to the control content data illustrated in FIG. 6.

The device controller 129 controls, in accordance with the control content determined in step S104, one or more of the air-conditioner 102, the remote control device 100, and the like (step S105).

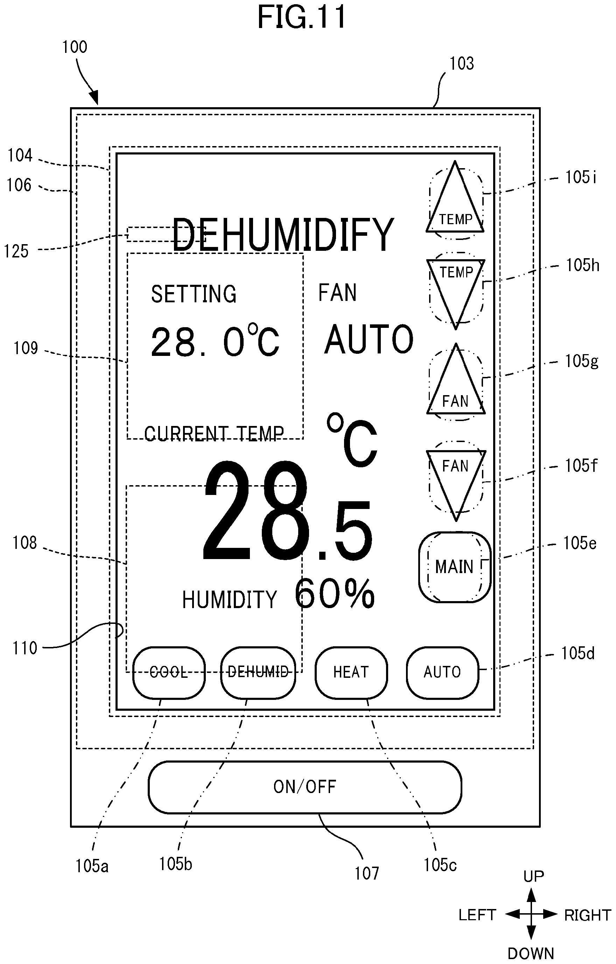

As described above in the example as illustrated in FIG. 1, "PRESSURE-SENSING AREA B" is associated with a function of switching to the "DEHUMID" mode after the pressing of "PRESSURE-SENSING AREA B". Thus the device controller 129 switches the operation mode of the air-conditioner 102 from the cooling mode to the dehumidification mode. The device controller 129 outputs an instruction to the display controller 130 to cause the image displayed on the display 104 to be switched to the image as illustrated in FIG. 11. In response the instruction, the display controller 130 generates image data for displaying the image as illustrated in FIG. 11, and then displays the image on the display 104. In the image as illustrated in FIG. 11, "COOL" in FIG. 1 is replaced with "DEHUMIDIFY".

Accordingly, the remote control device 100 according to the present example enables determination of which of the pressure-sensing areas 105a to 105i of the touch panel 106 is depressed. The air-conditioner 102, the remote control device 100, and the like are controlled to operate depending on the depressed one of the pressure-sensing areas 105a to 105i.

In the foregoing description, the operation of the remote control device 100 according to the present example is described. Hereinafter a method for manufacturing the remote control device 100 according to the present example is described.

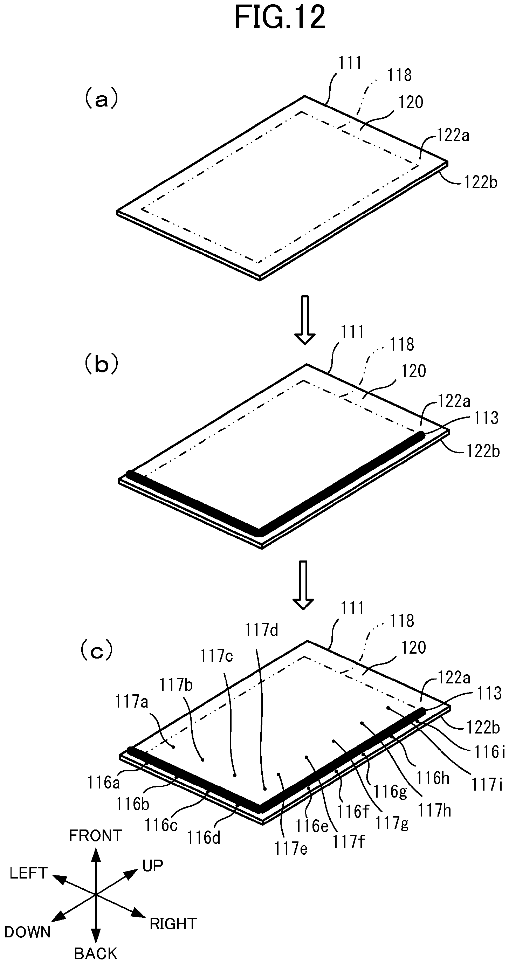

As illustrated in diagram (a) of FIG. 12, the first sheet 111 is prepared.

As illustrated in diagram (b) of FIG. 12, the first conductive path 113 is disposed along the outer edge of the image transmission area 118 on the first main surface 122a of the first sheet 111. The first conductive path 113 is disposed by printing of conductive ink. In the present example, the first conductive path 113 is disposed along the lower side and the right side of the image transmission area 118.

As illustrated in diagram (c) of FIG. 12, the spacers 116a to 116i and 117a to 117i are disposed on the first main surface 122a of the first sheet 111.

The spacers 116a to 116i are disposed on the respective pressure-detecting conductive paths 115a to 115i. The spacers 116a to 116i are disposed between the position where the second conductive path 114 is to be disposed and the first conductive path 113, as viewed from the front.

Each of the spacers 117a to 117i is disposed in a corresponding area in the image transmission area 118 of the first sheet 111. Each of the areas in which the respective spacers 117a to 117i are disposed is an area located in a direction in which the pressure-detecting conductive paths 115a to 115i are each extended, as viewed from the front, with the second sheet 112 and the first sheet 111 stacked.

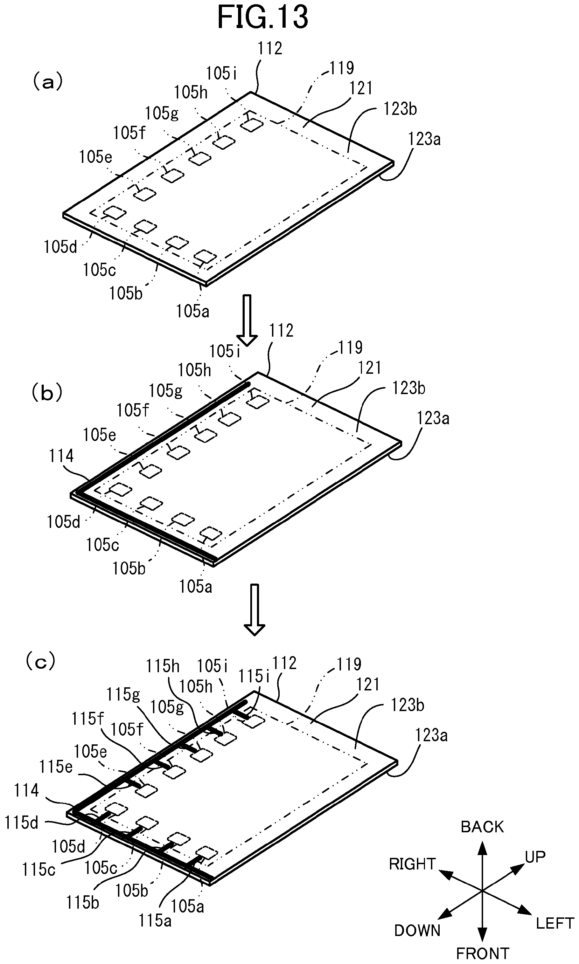

As illustrated in diagram (a) of FIG. 13, the second sheet 112 is prepared.

As illustrated in diagram (b) of FIG. 13, the second conductive path 114 is disposed along the outer edge of the image transmission area 119 on the main surface 123a of the second sheet 112. The second conductive path 114 is disposed by printing of conductive ink. The second conductive path 114 is disposed in a position to be spaced apart from the first conductive path 113 as viewed from the front, with the first sheet 111 and the second sheet 112 opposing each other. In the present example, the second conductive path 114 is disposed in the lower portion and the right portion of the surrounding area 121 of the second sheet 112, which are each located below and to the right of the image transmission area 119.

As illustrated in diagram (c) of FIG. 13, each of the pressure-detecting conductive paths 115a to 115i is disposed on the second main surface 123a of the second sheet 112. The pressure-detecting conductive paths 115a to 115i are each provided by printing of conductive ink. The pressure-detecting conductive paths 115a to 115i are each provided to be electrically connected with the second conductive path 114. The pressure-detecting conductive paths 115a to 115i are each disposed to intersect the first conductive path 113 as viewed from the front with the first sheet 111 and the second sheet 112 opposing each other.

The first sheet 111 on which the first conductive path 113 is disposed and the second sheet 112 on which the second conductive path 114 and the pressure-detecting conductive paths 115a to 115i are disposed are fixed to the first main surface 122a and the second main surface 123a opposing each other. Here, the image transmission area 118 of the first sheet 111 and the image transmission area 119 of the second sheet 112 are disposed to be aligned with each other in the front-back direction. Examples of fixing techniques include a use of an adhesive 133 applied to the outer edge portions of the first main surface 122a or the second main surface 123a (e.g., see FIG. 8). Double-sided tape or the like may be used for fixed attachment. The touch panel 106 according to the present example is thereby manufactured.

As illustrated in FIG. 4, the screen of the display 104 is fixed to face the rear surface (the third main surface 122b) of the touch panel 106. The microcomputer 109 and the power source 108 are each fixed on the rear surface of the display 104. Screws, adhesives, double-sided tape, or the like may be used for the fixing as appropriate. The one end of the second conductive path 114 is electrically connected to the A/D input port 124 of the microcomputer 109 by the wire L1 having a branch line with the resistor 125 disposed thereon. The one end of the first conductive path 113 is connected to the power source 108 by the wire L2.

The touch panel 106, the display 104, the microcomputer 109, the power source 108, and the like, all of which are assembled as described above, are enclosed within the cover 103. The remote control device 100 is thereby manufactured. The end portion of the branch line of the wire L1 is grounded, for example at installation of the remote control device 100.

According to the present example, it is sufficient for detection of the pressing of the pressure-sensing areas 105a to 105i that the first conductive path 113 is disposed on the first sheet 111, and the second conductive path 114 and at least one of the pressure-detecting conductive paths 115a to 115i are disposed on the second sheet 112. In other words, detection of the pressing of the pressure-sensing areas 105a to 105i does not require a transparent conductive film to be provided on either the first sheet 111 or the second sheet 112. This simplifies the structure of the touch panel 106 itself. The detection of the pressed area is thus enabled with the simple structure.

According to the present example, upon the pressing of any of the pressure-sensing areas 105a to 105i corresponding one-to-one to the pressure-detecting conductive paths 115a to 115i, one of the pressure-detecting conductive paths 115a to 115i corresponding to the pressed one of the pressure-sensing areas 105a to 105i is in electrical contact with the first conductive path 113. An electric circuit is thereby formed. The length of the electric circuit formed upon the pressing varies depending on which of the pressure-sensing areas 105a to 105i is pressed. Thus only applying a voltage to either of the first conductive path 113 or the second conductive path 114 determines which of the pressure-sensing areas 105a to 105i is pressed, based on the resistance value of the electric circuit formed upon the pressing. This thus enables simplification of the structure for detection of which of the pressure-sensing areas 105a to 105i is pressed.

According to the present example, applying a predetermined voltage to the first conductive path 113 is sufficient, so that switching is not required between the conductive paths 113 and 114 to which the voltage is to be applied. This simplifies the structure for detection of the pressed one of the pressure-sensing areas 105a to 105i. Detection of the pressed one of the pressure-sensing areas 105a to 105 i is thus enabled with the simple structure.

According to the present example, the voltage of the input signal that is input to the A/D input port 124 of the microcomputer 109 is substantially equal to the voltage at the one end of the second conductive path 114. Thus, measurement of the voltage of the input signal that is input to the A/D input port 124 enables determination of which of the pressure-sensing areas 105a to 105i is pressed. The pressed one of the pressure-sensing areas 105a to 105i is thus detected even without an additional sensor for measuring the voltage at the one end of the second conductive path 114. This simplifies the structure for detection of the pressed one of the pressure-sensing areas 105a to 105i. Detection of the pressed one of the pressure-sensing areas 105a to 105i is thus enabled with the simple structure.

In the present example, the first conductive path 113 is disposed in parallel to the outer edge of the image transmission area 118, and the second conductive path 114 is disposed in parallel to the outer edge of the image transmission area 119. Such parallel arrangement may allow the manufacturing of the touch panel 106 to be achieved by simply disposing a certain length of pressure-detecting conductive path 115. The easy manufacturing of the touch panel 106 is enabled.

Example 1 of the present disclosure is described above, but is not limited to the description above.

For example, the target to be controlled (a control target device) by the remote control device 100 is not limited to the air-conditioner 102, and may be an electric device including, for example, a lighting device and the like. The input device 131 is not limited to the remote control device 100, and may be incorporated in various apparatuses, devices, or the like such as electrical apparatuses and terminal devices.

For example, both the first sheet 111 and the second sheet 112 are exemplified as the entirely transparent sheets in the present example. However, the surrounding area 120 in the first sheet 111 and the surrounding area 121 in the second sheet 112 need not be transparent provided that at least the image transmission areas 118 and 119 are transparent. The image transmission areas 118 and 119 having a size and shape allowing transmission through at least a predetermined range of screen on the display 104 is sufficient.

For example, the arrangement of the screen of the display 104 to be located behind the third main surface 122b is exemplified in the present example. However, the touch panel 106 may be arranged back-to-front in the remote control device 100 relative to the orientation of the touch panel 106 in the present example. In this case, the screen of the display 104 is located behind the fourth main surface 123b, and the third main surface 122b forms the front surface of the remote control device 100. In this arrangement, when any of the pressure-sensing areas 105a to 105i of the third main surface 122b is pressed, the touch panel 106 outputs a signal in accordance with the pressed one of the pressure-sensing areas 105a to 105i.

For example, any or all of the first conductive path 113, the second conductive path 114, and the pressure-detecting conductive paths 115a to 115i may be formed of materials other than conductive ink, and may be a thin wire of silver, copper, or the like.

For example, the first conductive path 113 may be disposed at any position of the first main surface 122a. It is sufficient that the second conductive path 114 is disposed on the second main surface 123a at a position spaced apart from the first conductive path 113 as viewed from the front. It is sufficient that the pressure-detecting conductive paths 115a to 115i are formed on the second main surface 123a to be electrically connected with the second conductive path 114 so as to intersect the first conductive path 113 as viewed from the front.

However, if the first conductive path 113 is a line having a width of approximately 0.1 mm, the first conductive path 113 can be perceived by the human eye. If the first conductive path 113 having such a width occupies a place in front of the screen, the reduced visibility of the screen may be caused. However, the first conductive path 113 does not occupy a place in front of the screen if the first conductive path 113 is disposed on the outer edge of the image transmission area 118 of the first sheet 111 as in the present example, or if the first conductive path 113 of the first sheet 111 is disposed in the surrounding area 120. This enables the reduction in the visibility of the screen to be prevented.

In addition, similarly to the first conductive path 113, disposing the second conductive path 114 and the pressure-detecting conductive paths 115a to 115i on the outer edge or in the surrounding area 121 of the image transmission area 119 of the second sheet 112 enables the reduction in the visibility of the screen to be prevented.

### Example 2

This example is not an embodiment of the present invention falling under the scope of the appended claims but helpful to understand certain aspects thereof.

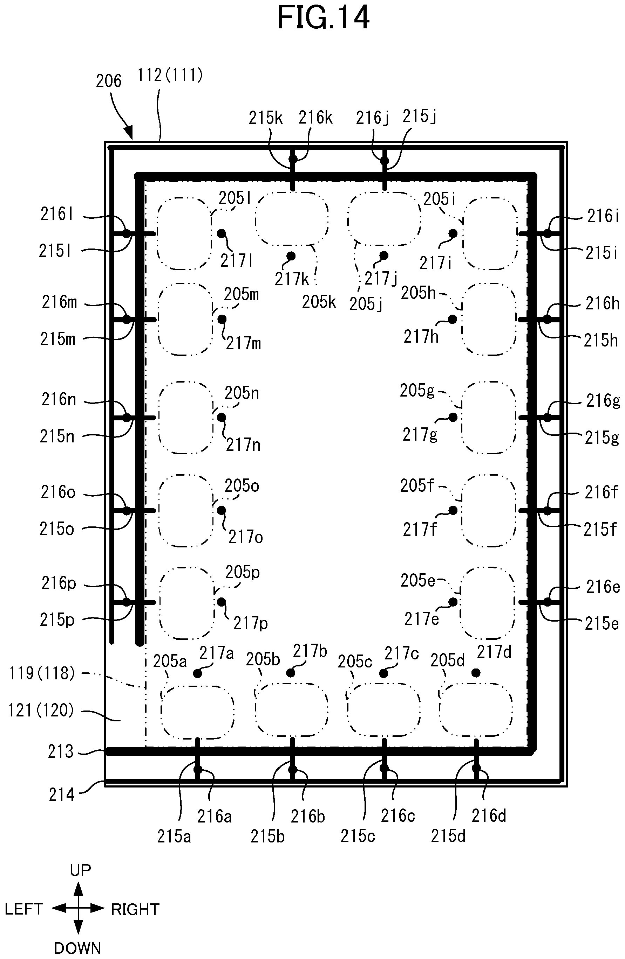

As illustrated in FIG. 14, which is a front view of the touch panel 206, a difference between a touch panel 206 according to example 2 and the touch panel 106 according to example 1 lies in an extent of the area where the first conductive path 213, the second conductive path 214, and the pressure-detecting conductive paths 215a to 215p are disposed.

Specifically, as illustrated therein, both the first conductive path 213 and the second conductive path 214 are disposed to surround the image transmission areas 118 and 119, that is, are disposed substantially entirely along the outer edge of the image transmission areas 118 and 119. The pressure-detecting conductive paths 215a to 215p are spaced substantially evenly in directions parallel to the respective four sides of the outer edges of the image transmission areas 118 and 119. As illustrated therein, spacers 216a to 216p and 217a to 217p are disposed in association with the pressure-detecting conductive paths 215a to 215p. The other components of the touch panel 206 are similar to those of the touch panel 106 according to example 1.

In the present example, the first conductive path 213 and the second conductive path 214 are disposed to surround the corresponding image transmission areas 118 and 119. The pressure-sensing areas 205a to 215p are thus disposed along the outer edges of the image transmission areas 118 and 119, as illustrated in FIG. 14. This thus allows the arrangement of a larger number of pressure-sensing areas 205a to 205p than those of the touch panel 106 in example 1.

### Example 3

This example is not an embodiment of the present invention falling under the scope of the appended claims but helpful to understand certain aspects thereof.

Example 1 exemplifies the arrangement of the first conductive path 113 and the second conductive path 114 to be disposed linearly along the lower side and the right side of the outer edges of the image transmission areas 118 and 119, that is, in parallel to the outer edges of the image transmission areas 118 and 119. In example 3, the arrangement of the first conductive path and the second conductive path in a bent manner is exemplified.

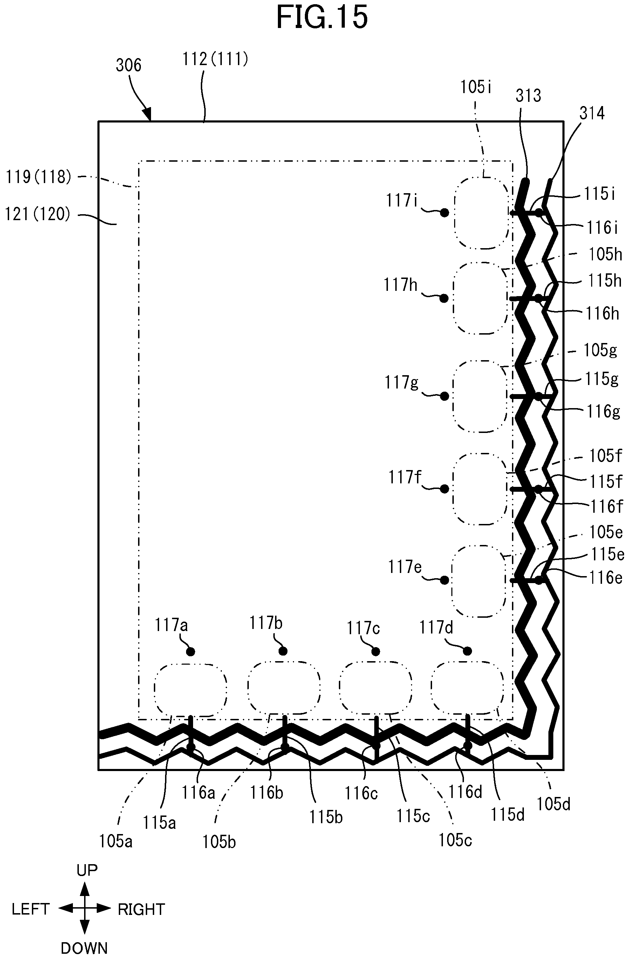

Specifically, a touch panel 306 according to the present example is provided with a first conductive path 313 and a second conductive path 314, as illustrated in FIG. 15, which is a front view of the touch panel 306. The other components of the touch panel 306 are similar to those of the touch panel 106 according to example 1.

The first conductive path 313 and the second conductive path 314 are disposed along the lower side and the right side of the outer edges of the image transmission areas 118 and 119 as viewed from the front, similarly to the first conductive path 113 and the second conductive path 114 according to example 1.

The first conductive path 313 and the second conductive path 314 according to the present example differ from the first conductive path 113 and the second conductive path 114 according to example 1 in that the first conductive path 313 and the second conductive path 314 bend along the outer edges of the image transmission areas 118 and 119 as viewed from the front. Here, the term "bending" means having an angled corner, in other words, being sharply angled so as to form a corner.

According to the present example, similarly to example 1, when any of the pressure-sensing areas 105a to 105i is pressed, one of the pressure-detecting conductive paths 115a to 115i corresponding to the pressed one of the pressure-sensing areas 105a to 105i is in electrical contact with the first conductive path 313. An electric circuit is thereby formed by the first conductive path 313, the second conductive path 314, and the one of the pressure-detecting conductive paths 115a to 115i corresponding to the pressed one of the pressure-sensing areas 105a to 105i.

In the present example, the first conductive path 313 bends, the pressure-detecting conductive paths 115a to 115i are each connected at different positions of the second conductive path 314, and the second conductive path 314 bends. The difference between the lengths of the paths of the electric circuits formed for the pressed pressure-sensing areas 105a to 105i is greater than that in example 1. Consequently, the difference in the resistance values of the formed electric circuits is greater for each of the pressure-sensing areas 105a to 105i to be pressed. Hence, this allows the pressed one of the pressure-sensing areas 105a to 105i to be determined more accurately than in example 1.

### Example 4

This example is not an embodiment of the present invention falling under the scope of the appended claims but helpful to understand certain aspects thereof.

The touch panel 306 according to example 3 is described above using the example in which both the first conductive path 313 and the second conductive path 314 bend along the outer edge of the image transmission areas 118 and 119 as viewed from the front.

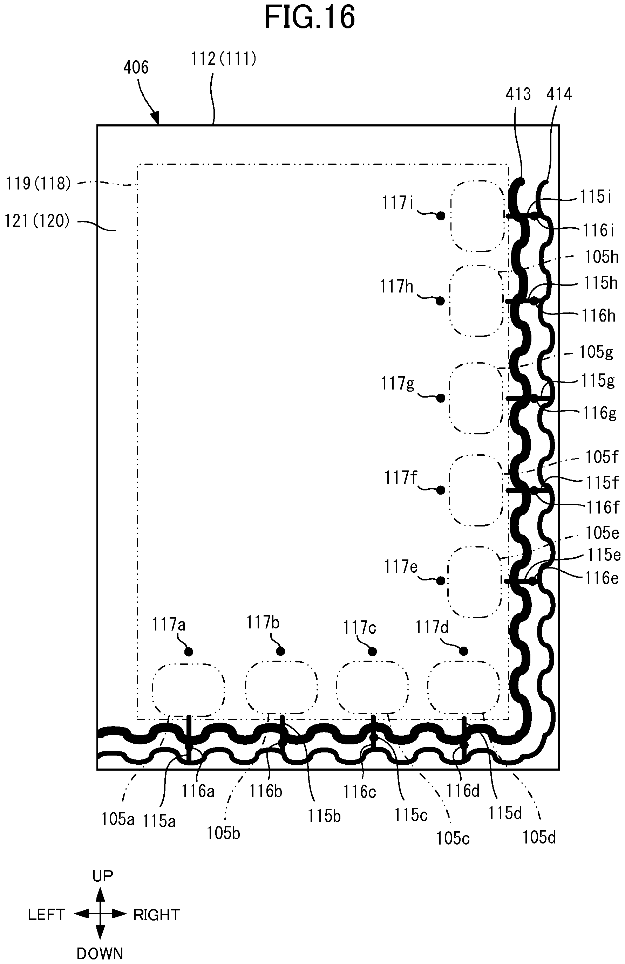

A touch panel 406 according to example 4 is provided with a first conductive path 413 and a second conductive path 414, both of which are curved along the outer edge of the image transmission areas 118 and 119 as viewed from the front, as illustrated in FIG. 16, which is a front view of the touch panel 406. The other components of the touch panel 406 are similar to those of the touch panel 306 according to example 3.

Here, the term "curved" means having an arched form, in other words, having a smooth curve without a corner.

In the present example, similarly to example 3, the difference between the lengths of the paths of the electric circuits formed for the pressed pressure-sensing areas 105a to 105i is greater than that in example 1. Consequently, the difference in the resistance values of the formed electric circuits is greater for the pressure-sensing areas 105a to 105i to be pressed. Hence, this allows the pressed one of the pressure-sensing areas 105a to 105i to be determined more accurately than in example 1.

It is sufficient that the first conductive paths 313 and 413 are bent or curved between at least one pair of adjacent pressure-detecting conductive paths of the pressure-detecting conductive paths 115a to 115i, as viewed from the front. Accordingly, the electric circuit formed upon the pressing of one of the pressure-sensing areas 105a to 105i corresponding to the adjacent pressure-detecting conductive paths of the pressure-detecting conductive paths 115a to 115i has a greater difference in the length, or the resistance value, than that in example 1. This allows the pressed one of the pressure-sensing areas 105a to 105i corresponding to the adjacent pressure-detecting conductive paths of the pressure-detecting conductive paths 115a to 115i to be determined more accurately than in example 1.

It is sufficient that the second conductive paths 314 and 414 are bent or curved between at least one pair of adjacent pressure-detecting conductive paths of the pressure-detecting conductive paths 115a to 115i, as viewed from the front, connected to the second conductive paths 314 and 414 at different positions. Accordingly, the electric circuit formed upon the pressing of one of the pressure-sensing areas 105 a to 105i corresponding to the adjacent pressure-detecting conductive paths of the pressure-detecting conductive paths 115a to 115i has a greater difference in the length, or the resistance value, than that in example 1. This allows the pressed one of the pressure-sensing areas 105a to 105i corresponding to the adjacent pressure-detecting conductive paths of the pressure-detecting conductive paths 115a to 115i to be determined more accurately than in example 1.

In addition, similarly to example 3 and 4, more accurate determination of the pressed one of the pressure-sensing areas 105a to 105i is enabled even when each of the pressure-detecting conductive paths 115a to 115i is bent or curved as viewed from the front.

### Example 5

This example is not an embodiment of the present invention falling under the scope of the appended claims but helpful to understand certain aspects thereof.

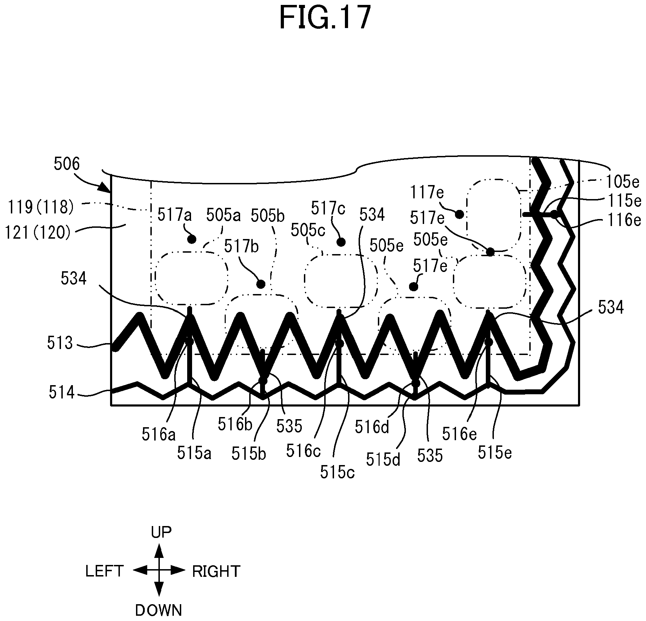

A touch panel 506 according to example 5 includes a first conductive path 513, a second conductive path 514, pressure-detecting conductive paths 515a to 515e, as illustrated in FIG. 17, which is a front view illustrating the lower portion of the touch panel 506.

Both the first conductive path 513 and the second conductive path 514 are disposed in a bent manner along the outer edges of the image transmission areas 118 and 119 as viewed from the front, similarly to the first conductive path 313 and the second conductive path 314 in example 3. Thus the first conductive path 513 has a convex portion 534 protruding toward the middle and a concave portion 535 recessed relative to the middle (distanced away from the middle), along the outer edges of the image transmission areas 118 and 119 as viewed from the front.

The pressure-detecting conductive paths 515a to 515e, which are substituted for the pressure-detecting conductive paths 115a to 115d in the example, are electrically connected to the second conductive path 514that is located along the lower side of the image transmission area 119. Each of the pressure-detecting conductive paths 515a to 515e is disposed to alternately overlap the convex portion 534 and the concave portion 535 as viewed from the front. The pressure-detecting conductive paths 515a, 515c, and 515e that overlap the convex portion 534 have a length shorter than the pressure-detecting conductive paths 515b and 515d that overlap the concave portion 535.

Spacers 516a to 516e and 517a to 517e are disposed in association with the pressure-detecting conductive paths 515a to 515e, as illustrated in FIG. 17. The other components of the touch panel 506 are similar to those of the touch panel 306 according to example 3.

According to the present example, as illustrated in FIG. 17, two rows of pressure-sensing areas 505a to 505e are configured along the outer edge (the lower side in the present example) of the image transmission areas 118 and 119. This enables the pressed area to be detected with a simple structure and also enables more pressure-sensing areas 505a to 505e to be disposed on the screen of the same size.

### Example 6

This example is not an embodiment of the present invention falling under the scope of the appended claims but helpful to understand certain aspects thereof.

Example 1 exemplifies the electrical connection of the pressure-detecting conductive paths 115a to 115i at different positions of the second conductive path 114. Example 6 differs from example 1 in the configuration of electrical connection between the pressure-detecting conductive paths and the second conductive path 114.

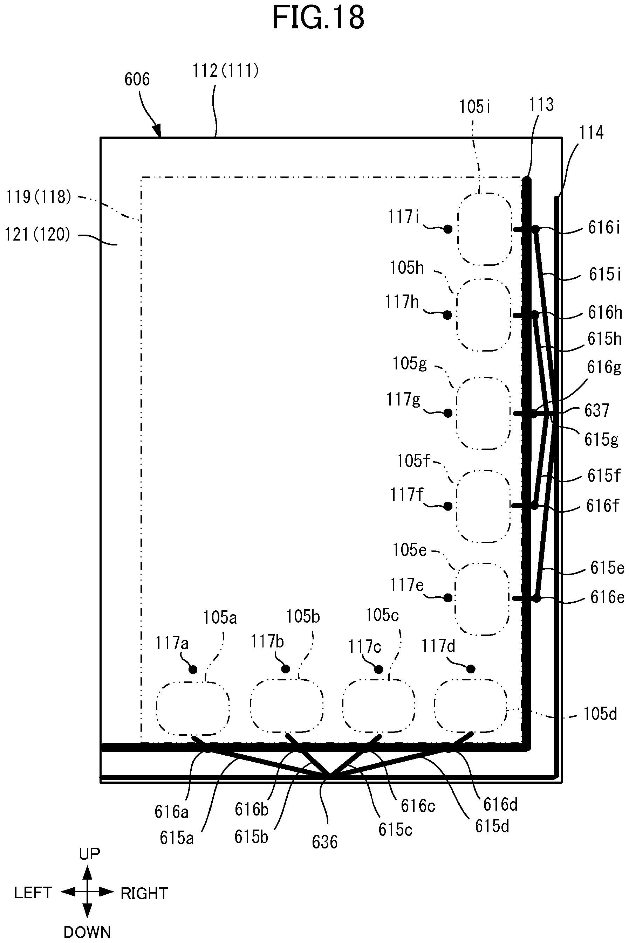

A touch panel 606 according to the present example includes pressure-detecting conductive paths 615a to 615i, and spacers 616a to 616i respectively associated with the respective pressure-detecting conductive paths 615a to 615i, as illustrated in FIG. 18, which is a front view of the touch panel 606. The other components of the touch panel 606 are similar to those of the touch panel 106 according to example 1.

The pressure-detecting conductive paths 615a to 615i are connected at a common point 636 to the second conductive path 114 extending along the lower side of the image transmission areas 118 and 119.

The pressure-detecting conductive paths 615e to 615i are connected at a common point 637 to the second conductive path 114 extending along the right side of the image transmission areas 118 and 119. Specifically, the pressure-detecting conductive paths 615e, 615g, and 615i are directly connected to a connection point 637. The pressure-detecting conductive paths 615f and 615h are directly connected to the pressure-detecting conductive path 615g, and are connected via the pressure-detecting conductive path 615g to the second conductive path 114 at the connection point 637.

According to the present example, it is sufficient that the first conductive path 113 is disposed on the first sheet 111 and that the second conductive path 114 and the pressure-detecting conductive paths 115a to 115i are disposed on the second sheet 112. That is, a transparent conductive film is not required on either the first sheet 111 or the second sheet 112. Thus, similarly to example 1, the structure of the touch panel itself is simplified.

According to the present example, applying a predetermined voltage to the first conductive path 113 may suffice. Measuring the voltage of the input signal that is input to the A/D input port 124 of the microcomputer 109 enables determination of the pressed one of the pressure-sensing areas. This simplifies the structure for detection of the pressed one of the pressure-sensing areas 105a to 105i, similarly to example 1.

Detection of the pressed one of the pressure-sensing areas 105a to 105i is thus enabled with the simple structure, similarly to example 1.

### Example 7

This example is not an embodiment of the present invention falling under the scope of the appended claims but helpful to understand certain aspects thereof.

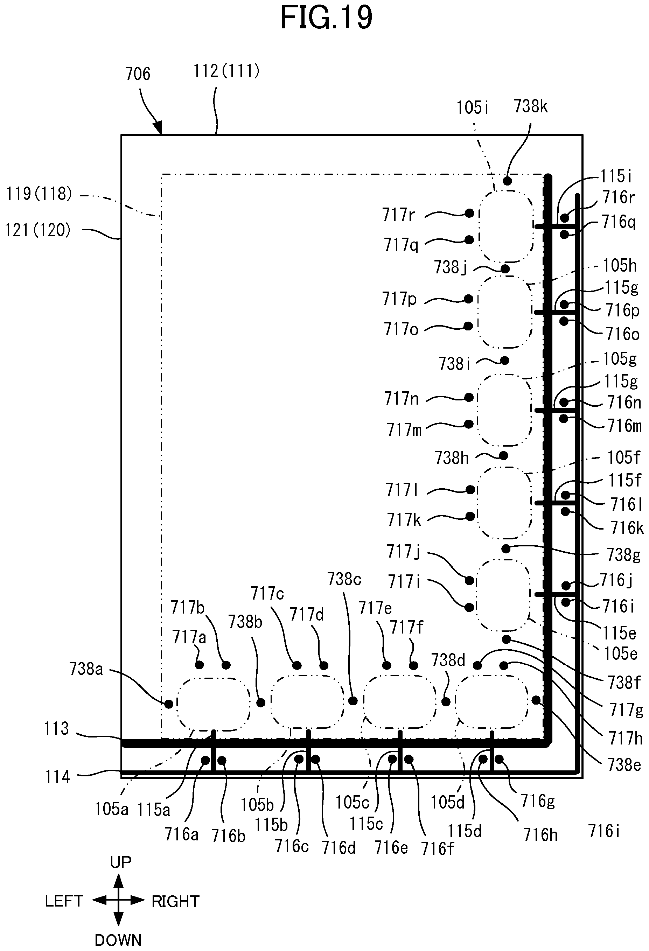

A touch panel 706 according to example 7 differs from the touch panel 106 according to example 1 in terms of the location and number of spacers 716a to 716r, 717a to 717r, and 738a to 738k provided, as viewed from the front as illustrated in FIG. 19, which is a front view of the touch panel 706. The other components of the touch panel 706 are similar to those of the touch panel 106 according to example 1.

Specifically, the spacers 716a to 716r, 717a to 717r, and 738a to 738k are disposed between the first sheet 111 and the second sheet 112.

The spacers 716a to 716r are disposed, as viewed from the front as illustrated in FIG. 19, between the first conductive path 113 and the second conductive path 114 to the left and the right of each of the pressure-detecting conductive paths 115a to 115i.

The spacers 717a to 717r are disposed, as viewed from the front as illustrated in FIG. 19, such that two of the spacers are provided in each portion that is located inside the image transmission areas 118 and 119 in a direction in which each of the pressure-detecting conductive paths 115a to 115i extends.

The spacers 738a to 738k are disposed inside the image transmission areas 118 and 119 as viewed from the front as illustrated in FIG. 19. The spacers 738a to 738k are disposed between the pressure-sensing areas 105a to 105i. The spacers 738a to 738k are disposed outside the opposite ends of the pressure-sensing areas 105a to 105i in a direction where the pressure-sensing areas 105a to 105i are arranged.

The spacers 716a to 716r, 717a to 717r, and 738a to 738k are not limited to ones having the location or number as described in example 1 and 7, and may be provided as appropriate.

The spacers 716a to 716r maintain a gap between the pressure-detecting conductive paths 115a to 115i and the first conductive path 113, similarly to the spacers 116a to 116i in example 1. This reliably prevents the pressure-detecting conductive paths 115a to 115i and the first conductive paths 113 from making electrical contact therebetween with the pressure-sensing areas 105a to 105i not pressed.

With the pressure-sensing areas 105a to 105i not pressed, the spacers 717a to 717r maintain a gap between the second sheet 112 and the first sheet 111, which oppose each other in the front-back direction in the pressure-sensing areas 105a to 105i, similarly to the spacers 117a to 117i in example 1. Accordingly, when any of the pressure-sensing areas 105a to 105i is pressed, one of the pressure-detecting conductive paths 115a to 115i corresponding to the pressed one of the pressure-sensing areas 105a to 105i reliably flexes together with the second sheet 112, thereby enabling an electrical contact with the first conductive path 113.

With the pressure-sensing areas 105a to 105i not pressed, the spacers 738a to 738k maintain a gap between the second sheet 112 and the first sheet 111, which oppose each other in the front-back direction in the pressure-sensing areas 105a to 105i. Accordingly, when any of the pressure-sensing areas 105a to 105i is pressed, one of the pressure-detecting conductive paths 115a to 115i corresponding to the pressed one of the pressure-sensing areas 105a to 105i reliably flexes together with the second sheet 112, thereby enabling an electrical contact with the first conductive path 113.

When one of the adjacent pressure-sensing areas 105a to 105i is pressed, the spacers 738a to 738k prevent flexing of a portion of the second sheet 112 that corresponds to another of the adjacent pressure-sensing areas 105a to 105i. Accordingly, when any of the pressure-sensing areas 105a to 105i is pressed, one of the pressure-detecting conductive paths 115a to 115i corresponding to the pressed one of the pressure-sensing areas 105a to 105i reliably flexes together with the second sheet 112, thereby enabling an electrical contact with the first conductive path 113.

### Embodiment 1

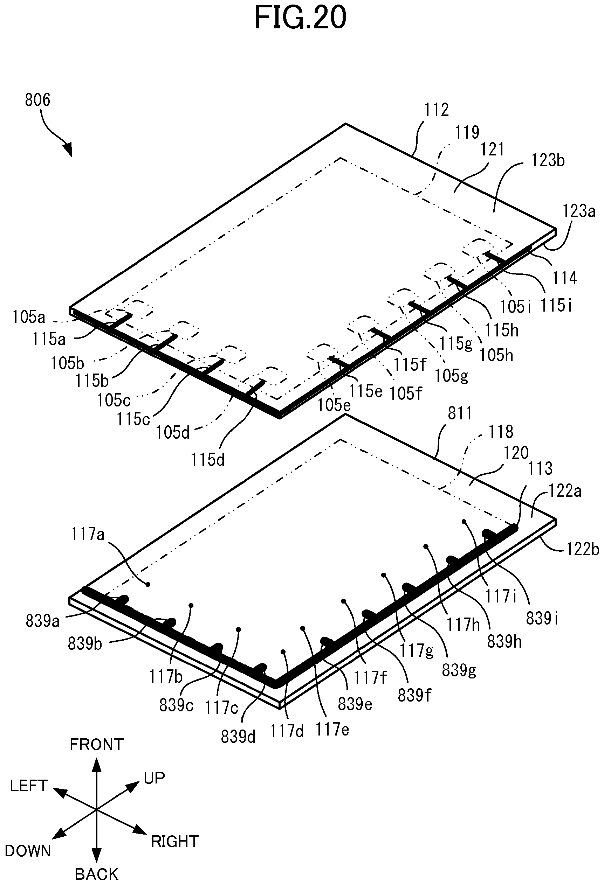

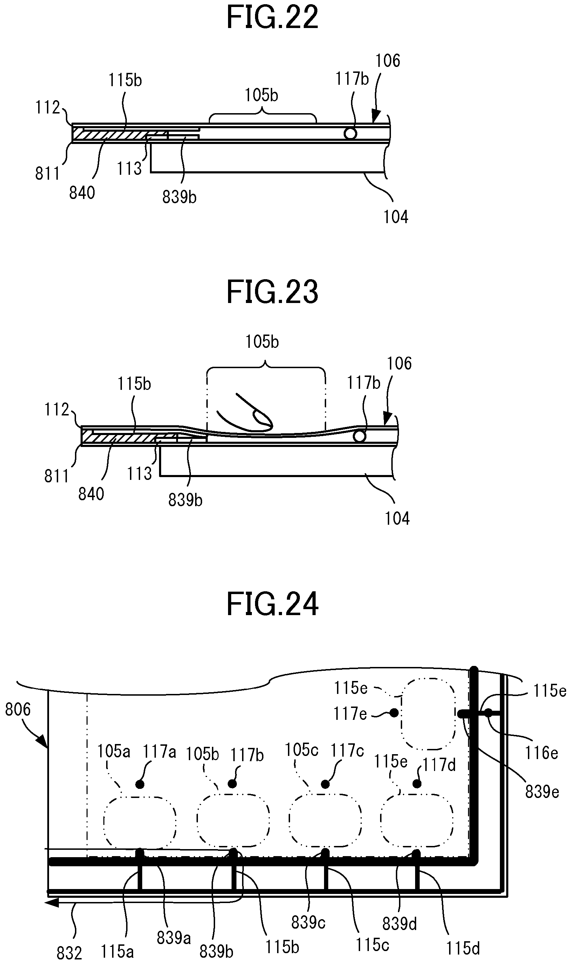

A touch panel 806 according to Embodiment 1 according to the invention includes a first sheet 811, which is substituted for the first sheet 111 in example 1, as illustrated in FIG. 20. The first sheet 811 in the present embodiment has a generally similar configuration to the first sheet 111 in example 1 except that the first sheet 811 further includes pressure-detecting auxiliary conductive paths 839a to 839i (see FIG. 20) and an insulating layer 840 (see FIG. 22) that is substituted for the spacers 116a to 116i.

Each of the pressure-detecting auxiliary conductive paths 839a to 839i is an electrically conductive portion formed on the first main surface 122a in linear or strip-like form in order to detect which of the pressure-sensing areas 105a to 105i is pressed. The pressure-detecting auxiliary conductive paths 839a to 839i are disposed in association with the corresponding pressure-detecting conductive paths 115a to 115i, and are electrically connected to the first conductive path 113.

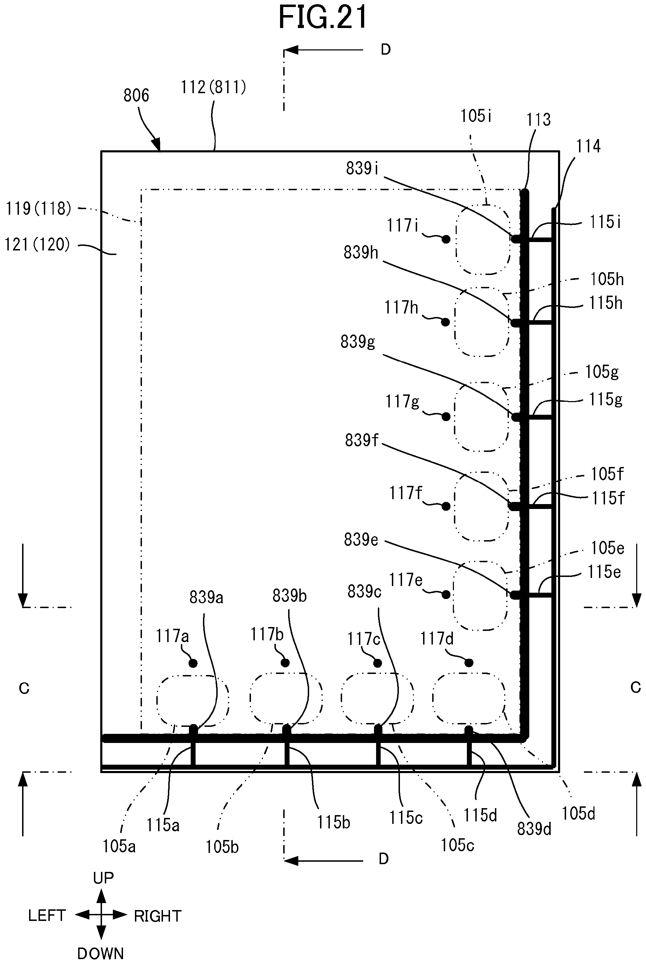

Specifically, as illustrated in FIG. 21, each of the pressure-detecting auxiliary conductive paths 839a to 839i extends from an intersection between the first conductive path 113 and each of the pressure-detecting conductive paths 115a to 115i to the corresponding pressure-sensing areas 105a to 105i each associated with the pressure-detecting conductive paths 115a to 115i, as viewed from the front (meaning as viewed in a direction perpendicular to the first sheet 111 and the second sheet 112 opposing each other). The pressure-detecting auxiliary conductive paths 839a to 839i each include an overlapping portion with the corresponding pressure-detecting conductive paths 115a to 115i as viewed from the front.

Here, the phrase "including an overlapping portion" includes the meaning of being in states in which, for example, when the pressure-detecting conductive path 115a and the pressure-detecting auxiliary conductive path 839a are viewed from the front, a portion of the pressure-detecting conductive path 115a and a portion of the pressure-detecting auxiliary conductive path 839a are overlapped with each other, and the portion of the pressure-detecting conductive path 115a and the entire pressure-detecting auxiliary conductive path 839a are overlapped with each other. The same applies to the pressure-detecting conductive paths 115b to 115i and the corresponding pressure-detecting auxiliary conductive paths 839b to 839i.

It is sufficient that the pressure-detecting auxiliary conductive paths 839a to 839i are disposed in association with the pressure-detecting conductive paths 115a to 115i. Thus, for example, with a single pressure-detecting conductive path 115a, a single pressure-detecting auxiliary conductive path 839a may be sufficient.

The insulating layer 840 is disposed between the first sheet 811 and the second sheet 112, as illustrated in FIG. 22, which is the cross-sectional view. It is sufficient that the insulating layer 840 is disposed so that the pressure-detecting conductive paths 115a to 115i are spaced apart from the first conductive path 113 (that is, no electrical connection therebetween) with the pressure-sensing areas 105a to 105i not pressed. In the present embodiment, as illustrated in FIG. 22, the insulating layer 840 is disposed between the first sheet 811 and the second sheet 112 in the respective surrounding areas 120 and 121 to thereby electrically insulate the first conductive path 113 from the pressure-detecting conductive paths 115a to 115i. The insulating layer 840 may also have a capability to provide adhesion between the first sheet 811 and the second sheet 112.

The structure having the insulating layer 840 instead of the spacers 116a to 116i may be adopted in other examples.

In the touch panel 806 according to the present embodiment, when any of the pressure-sensing areas 105a to 105 i is pressed, the pressed one of the pressure-sensing areas 105a to 105i is depressed downwardly. FIG. 23 illustrates a cross-sectional view with the pressure-sensing area 105b pressed. Such downward depression makes an electrical connection between one of the pressure-detecting conductive paths 115a to 115i corresponding to the pressed one of the pressure-sensing areas 105a to 105i and the corresponding one of the pressure-detecting auxiliary conductive paths 839a to 839i. An electric circuit is thereby formed by the first conductive path 113, one of the pressure-detecting auxiliary conductive paths 839a to 839i and the pressure-detecting conductive path 115b, corresponding to the pressed one of the pressure-sensing areas 105a to 105i, and the second conductive path 114. A current flows in the electric circuit, similarly to the touch panel 106 according to example 1. Thus the current flows through the electric circuit formed upon the pressing of any of the pressure-sensing areas 105a to 105i, and the input signal is input to the A/D input port 124. FIG. 24 illustrates a current flow, as indicated by an arrow 832, through the electric circuit formed upon the pressing of the pressure-sensing area 105b.

The other operations of the touch panel 806 are generally similar to the operation of the touch panel 106 according to example 1.

A method for manufacturing the touch panel 806 according to the present embodiment is described.

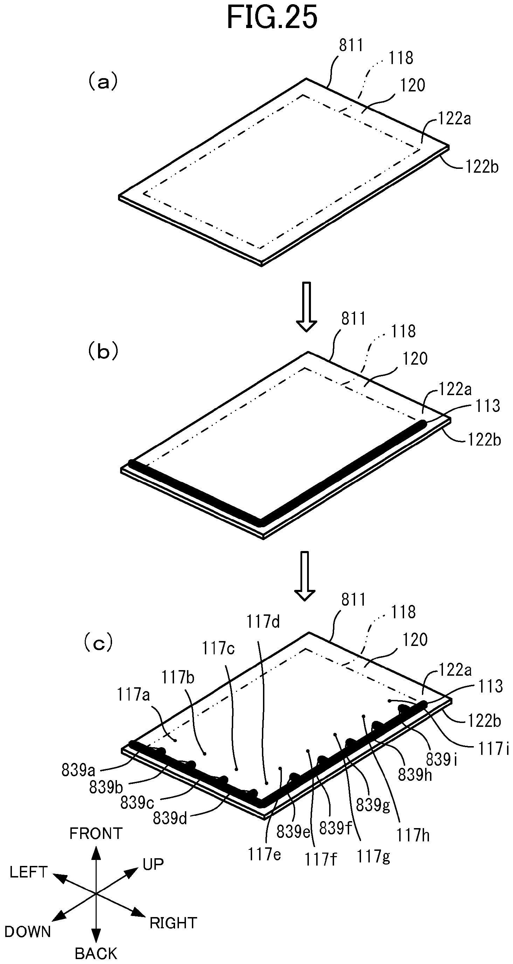

As illustrated in diagrams (a) and (b) of FIG. 25, similarly to the touch panel 106 according to example 1, the first sheet 811 is prepared, and the first conductive path 113 is disposed on the first main surface 122a of the first sheet 811.

As illustrated in diagram (c) of FIG. 25, the pressure-detecting auxiliary conductive paths 839a to 839i and the spacers 117a to 117i, similar to those in example 1, are disposed on the first main surface 122a of the first sheet 811. The pressure-detecting auxiliary conductive paths 839a to 839i are each disposed at a predetermined position to include an overlapping portion with the respective pressure-detecting conductive paths 115a to 115i. In the present embodiment, the pressure-detecting auxiliary conductive paths 839a to 839i are each disposed in linear form parallel to the respective pressure-detecting conductive path 115a to 115i.

Similarly to example 1, the second conductive path 114 and the pressure-detecting conductive paths 115a to 115i are disposed on the second sheet 112.

The first sheet 811 on which the first conductive path 113, the pressure-detecting auxiliary conductive paths 839a to 839i, and the spacers 117a to 117i are disposed and the second sheet 112 on which the second conductive path 114 and the pressure-detecting conductive paths 115a to 115i are disposed are fixed to the first main surface 122a and the second main surface 123a opposing each other. Here, the image transmission area 118 of the first sheet 811 and the image transmission area 119 of the second sheet 112 are disposed to be aligned with each other in the front-back direction. The insulating layer 840 including adhesives, double-sided tapes, or the like, which is, for example, applied in the surrounding area 120 of the first main surface 122a and the surrounding area 121 of the second main surface 123a, may be used for the fixing. The touch panel 806 according to the present embodiment is thereby manufactured.

In addition to the similar effects as in example 1, the present embodiment has the following effects.

The pressure-detecting auxiliary conductive paths 839a to 839i are disposed to include an overlapping portion with the respective pressure-detecting conductive paths 115a to 115i as viewed from the front. This arrangement ensures that, upon pressing of any of the pressure-sensing areas 105a to 105i, one of the pressure-detecting auxiliary conductive paths 839a to 839i and one of the pressure-detecting conductive paths 115a to 115i, corresponding to the pressed one of the pressure-sensing areas 105a to 105i, are in contact with each other. This thereby ensures formation of the electric circuit formed, upon the pressing of any of the pressure-sensing areas 105a to 105 i, by the first conductive path 113, one of the pressure-detecting auxiliary conductive path 839a to 839i and the pressure-detecting conductive paths 115a to 115i, which correspond to the pressed one of the pressure-sensing areas 105a to 105i, and the second conductive path 114. The detection of the pressed area is thus enabled with the simple structure.

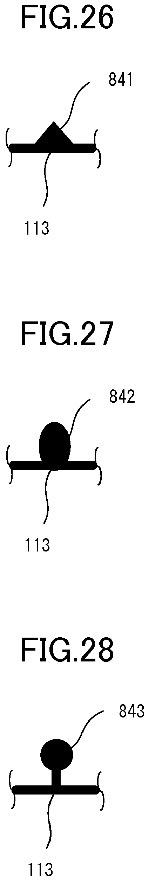

Here, as illustrated in FIGS. 26 to 28, as viewed from the front, each of the pressure-detecting auxiliary conductive paths 839a to 839i forms a triangular pressure-detecting auxiliary conductive path 841, an elliptical pressure-detecting auxiliary conductive path 842, a linear pressure-detecting auxiliary conductive path 843 having a round portion at the tip, or the like, as viewed from the front.

However, as in the present embodiment, disposing the pressure-detecting auxiliary conductive paths 839a to 839i in strip-like or linear form reduces the area of overlapping portion with the screen of the display 104, thereby preventing of the reduction in the visibility of the screen. In this respect, the pressure-detecting auxiliary conductive paths 839a to 839i and the pressure-detecting conductive paths 115a to 115i desirably have a thin line shape.

### Embodiment 2

In examples 3 and 4 and the like, the first conductive paths 313 and 413 and the second conductive paths 314 and 414, which have bent or curved shape, are exemplified. In such examples, as described above, the first conductive paths 313 and 413 and the second conductive paths 314 and 414, which have the bent or curved shape, serve as a resistive element to cause the electric circuit formed upon the pressing of any of the pressure-sensing areas 105a to 105i to have a greater resistance value than in example 1.

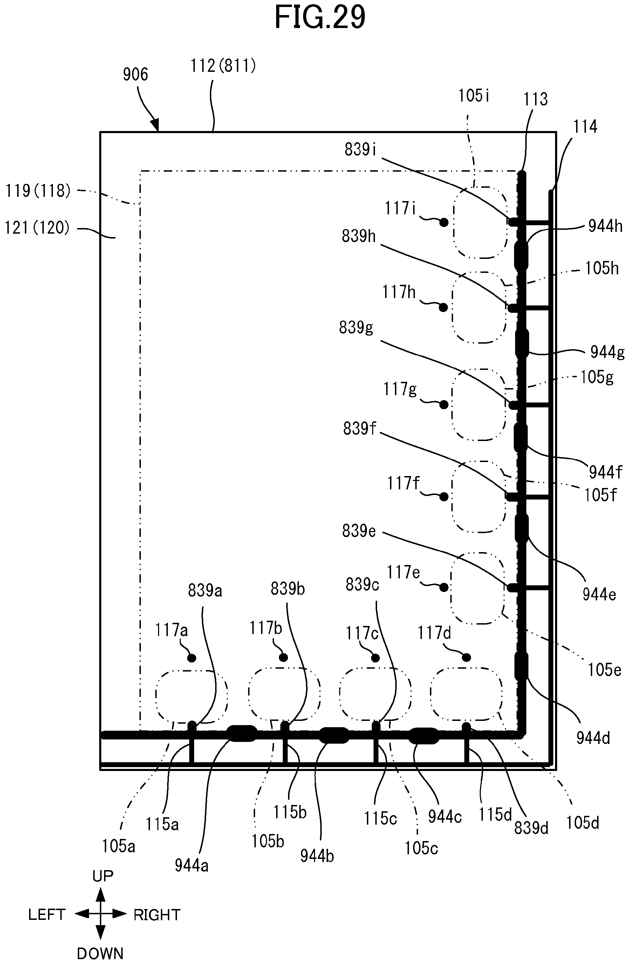

In a touch panel 906 according to Embodiment 2, as illustrated in FIG. 29, the first conductive path 113 includes resistances 944a to 944h, which serve as a resistive element, disposed between the adjacent pairs of the pressure-detecting auxiliary conductive paths 839a to 839i, as viewed from the front (meaning as viewed in a direction perpendicular to the first sheet 811 and the second sheet 112 opposing each other).

The resistances 944a to 944h are, for example, made of carbon and the like, formed by printing.

It is sufficient that the resistances 944a to 944h are disposed between at least one pair of the adjacent pressure-detecting conductive paths of the pressure-detecting auxiliary conductive paths 839a to 839i as viewed from the front.

FIG. 29 illustrates an example in which the resistances 944a to 944h are provided in the touch panel 806 according to Embodiment 1. However, the resistances 944a to 944h in the present embodiment may be adopted in the touch panel 106 according to example 1. In this case, it is sufficient that the resistances 944a to 944h are disposed between at least one pair of the adjacent pressure-detecting conductive paths of the pressure-detecting conductive paths 115a to 115i as viewed from the front.

According to the present embodiment and variations thereof, generally similarly to examples 3 and 4 and the like, the formed electric circuits have different resistance values depending on the pressed pressure-sensing areas 105a to 105i. Hence, this allows the pressed one of the pressure-sensing areas 105a to 105i to be determined more accurately than in example 1.

### Embodiment 3

In Embodiment 2, the resistances 944a to 944h disposed only on the first conductive path 113 are exemplified.

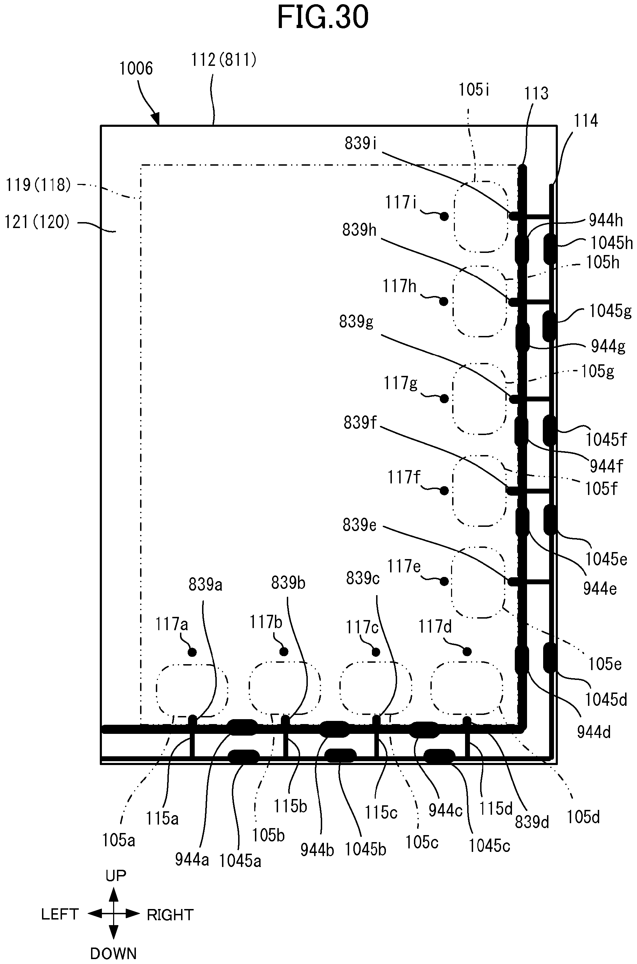

A touch panel 1006 according to Embodiment 3 includes, in addition to the components of the touch panel 906 according to Embodiment 2, resistances 1045a to 1045h also disposed on the second conductive path 114, as illustrated in FIG. 30.

That is, as illustrated in FIG. 30, the second conductive path 114 includes the resistances 1045a to 1045h, which serve as a resistive element, disposed between the respective pairs of the adjacent pressure-detecting conductive paths of the pressure-detecting conductive paths 115a to 115i, as viewed from the front (meaning as viewed in a direction perpendicular to the first sheet 811 and the second sheet 112 opposing each other).

The resistances 1045a to 1045h are, for example, made of carbon and the like, formed by printing, similarly to the resistances 944a to 944h in Embodiment 2.

It is sufficient that the resistances 1045a to 1045h are disposed between at least one pair of the adjacent pressure-detecting conductive paths of the pressure-detecting conductive paths 115a to 115i as viewed from the front.

FIG. 30 illustrates an example in which the resistances 1045a to 1045h are provided in the touch panel 906 according to Embodiment 2. However, the resistances 1045a to 1045h in the present embodiment may be adopted in the touch panel 106 according to example 1, the touch panel 806 according to Embodiment 1, and the like.

According to the present embodiment and variations thereof, generally similarly to examples 3 and 4 and the like, the formed electric circuits have different resistance values depending on the pressed pressure-sensing areas 105a to 105i. Hence, this allows the pressed one of the pressure-sensing areas 105a to 105i to be determined more accurately than in example 1.

The resistances 944a to 944h are, for example, made of carbon and the like, formed by printing.

It is sufficient that the resistances 944a to 944h are disposed between at least one pair of the adjacent pressure-detecting conductive paths of the pressure-detecting auxiliary conductive paths 839a to 839i as viewed from the front.

FIG. 29 illustrates an example in which the resistances 944a to 944h are provided in the touch panel 806 according to Embodiment 1. However, the resistances 944a to 944h in the present embodiment may be adopted in the touch panel 106 according to example 1. In this case, it is sufficient that the resistances 944a to 944h are disposed between at least one pair of the adjacent pressure-detecting conductive paths of the pressure-detecting conductive paths 115a to 115i as viewed from the front.

### Industrial Applicability

The present disclosure may be applied to touch panels, input devices, or remote control devices, which are adopted in various electrical apparatuses, devices, and the like. The present disclosure may also be applied to a method for manufacturing such a touch panel.

### Reference Signs List

100 Remote control device
102 Air-conditioner
104 Display
105a-105i, 205a-205p, 505a-505e Pressure-sensing area
106, 206, 306, 406, 506, 606, 706, 806, 906, 1006 Touch panel
108 Power source
109 Microcomputer
111 First sheet
112 Second sheet
113, 213, 313, 413, 513 First conductive path
114, 214, 314, 414, 514 Second conductive path
115a-115i, 215a-215p, 515a-515e, 815a-815i Pressure-detecting conductive path
116a-116i, 117a-117i, 216a-216p, 217a-217p, 516a-516e, 517a-517e, 816a-816i, 716a-716r, 717a-717r, 738a-738k Spacer
118, 119 Image transmission area
120, 121 Surrounding area
122a First main surface
123a Second main surface
124 A/D input port
125 Resistor
126 Control content data
127 Control content memory
128 Input signal controller
129 Device controller
130 Display controller
131 Input device
534 Convex portion
535 Concave portion
839a-839i, 841, 842, 843 Pressure-detecting auxiliary conductive path
944a-944h, 1045a-1045h Resistance

## Claims

1. A touch panel (806), **characterized by** comprising:
a first sheet (811);
a second sheet (112), the first sheet (811) and the second sheet (112) opposing each other with a gap therebetween;
a plurality of spacers (117a-117i) disposed between the first sheet (811) and the second sheet (112) to maintain the gap;
a first conductive path (113) formed on a first main surface (122a) of the first sheet (811), the first main surface (122a) opposing the second sheet (112);
a second conductive path (114) formed on a second main surface (123a) of the second sheet (112), the second main surface (123a) opposing the first sheet (811), the second conductive path (114) spaced away from the first conductive path (113) as viewed in a direction perpendicular to the first sheet (811);
the first conductive path (113) and the second conductive path (114) being parallel to each other as viewed in the direction perpendicular to the first sheet (811);
an insulating layer (840) disposed between the first conductive path (113) and the second conductive path (114);
a plurality of pressure-detecting conductive paths (115a-115i) electrically connected to the second conductive path (114) and formed on the second main surface (123a), the pressure-detecting conductive paths (115a-115i) intersecting the first conductive path (113) at intersection points as viewed in the direction perpendicular to the first sheet (811);
a plurality of pressure-sensing areas (105a-105i) associated with the pressure-detecting conductive paths (115a-115i); and
a plurality of pressure-detecting auxiliary conductive paths (839a-839i) electrically connected to the first conductive path (113) and formed on the first main surface (122a), the pressure-detecting auxiliary conductive paths (839a-839i) each extending from an intersection point of the intersection points to a pressure-sensing area of the pressure-sensing areas (105a-105i) as viewed in the direction perpendicular to the first sheet (811), the pressure-detecting auxiliary conductive paths (839a-839i) each including an overlapping portion with a pressure-detecting conductive path of the pressure-detecting conductive paths (115a-115i) as viewed in the direction perpendicular to the first sheet (811);
wherein each of the first sheet (811) and the second sheet (112) includes an image transmission area (118, 119) for transmission of an image and a surrounding area (120, 121) outside the image transmission area (118, 119), each of the plurality of spacers (117a-117i) is disposed in the image transmission areas (118, 119) for transmission of the image and is located along a line extending from a corresponding pressure-detecting conductive path of the pressure-detecting conductive paths (115a-115i) as viewed in the direction perpendicular to the first sheet (811)
the first conductive path (113) is disposed at an outer edge of the image transmission area (118) or in the surrounding area (120),
the second conductive path (114) is disposed in the surrounding area (121) and spaced further away from the image transmission area (119) than the first conductive path (113) as viewed in the direction perpendicular to the first sheet (811), and
the pressure-sensing areas (105a-105i) are each defined inside the image transmission areas (118, 119) between the portion in which the corresponding one of the spacers (117a - 117i) is provided and the first conductive path (113) as viewed in the direction perpendicular to the first sheet (811),
wherein the first conductive path (113), one of the pressure-detecting auxiliary conductive paths (839a - 839i) and one of the pressure-detecting conductive paths (115a - 115i) corresponding to a pressure-sensing area (105a - 105i), and the second conductive path (114) are configured to form an electric circuit upon pressing of the corresponding pressure-sensing area (105a - 105i) for detection of the pressed pressure-sensing area (105a - 105i).

2. The touch panel (806) according to claim 1, **characterized in that**
the first conductive path (113) includes a resistive element (944a-944h) between at least one pair of adjacent pressure-detecting auxiliary conductive paths (839a-839i) of the plurality of the pressure-detecting auxiliary conductive paths (839a-839i) as viewed in the direction perpendicular to the first sheet (811).

3. The touch panel (806) according to claim 1 or 2, **characterized in that**
each of the plurality of the pressure-detecting conductive paths (115a-115i) is connected to the second conductive path (114) at a different position.

4. The touch panel (806) according to claim 3, **characterized in that**
the second conductive path (114) includes a resistive element (1045a-1045h) between at least one pair of adjacent pressure-detecting conductive paths (115a-115i) of the plurality of the pressure-detecting conductive paths (115a-115i) as viewed in the direction perpendicular to the first sheet (811).

5. The touch panel (806) according to claim 1, **characterized in that**
each of the first conductive path (213) and the second conductive path (214) is disposed to surround the image transmission area (118, 119).

6. The touch panel (806) according to any one of claims 1 to 5, **characterized in that**
the first conductive path (113), the second conductive path (114), and the pressure-detecting conductive paths (115a-115i) are formed from conductive ink.

7. An input device (131), **characterized by** comprising:
a touch panel (806) according to any one of claims 1 to 6; and
an input signal controller (128) configured to determine, upon pressing of one of the plurality of pressure-sensing areas (105a-105i) associated with one of the plurality of the pressure-detecting conductive paths (115a-115i), the pressed pressure-sensing area (105a-105i) based on a resistance value of the electric circuit formed by the first conductive path (113), the second conductive path (114), the pressure-detecting conductive path (115a-115i) corresponding to the pressed pressure-sensing area (105a-105i) and the pressure-detecting auxiliary conductive path (839a-839i) corresponding to the pressed pressure-sensing area (105a-105i).

8. A remote control device (100), comprising:
a display (104) configured to display an image; and
an input device (131) according to claim 7, provided with the display (104) disposed to cause the image to be displayed on the display (104) to be presented through the image transmission areas (118, 119) for transmission of the image.

9. A touch panel manufacturing method, comprising:
forming a first conductive path (113) on a first main surface (122a) of a first sheet (811);
forming a second conductive path (114) on a second main surface (123a) of a second sheet (112), the second conductive path (114) spaced away from the first conductive path (113) as viewed in a direction perpendicular to the first sheet (811) with the first sheet (811) and the second sheet (112) opposing each other, wherein each of the first sheet (811) and the second sheet (112) includes an image transmission area (118, 119) for transmission of an image and a surrounding area (120, 121) outside the image transmission area (118, 119); the first conductive path is formed along an outer edge of the image transmission area (118) or in the surrounding area (120); the second conductive path is formed in the surrounding area (121);
the first conductive path (113) and the second conductive path (114) being parallel to each other and the second conductive path (114) is spaced further away from the image transmission area (119) than the first conductive path (113) as viewed in the direction perpendicular to the first sheet (811)
applying an insulating layer (840) between the first conductive path (113) and the second conductive path (114);
forming a plurality of pressure-detecting conductive paths (115a-115i) on the second main surface (123a), the pressure-detecting conductive paths (115a-115i) electrically connected to the second conductive path (114) and intersecting the first conductive path (113) at intersection points as viewed in the direction perpendicular to the first sheet (811);
predefining a plurality of pressure-sensing areas (105a-105i) each associated with a pressure-detecting conductive path of the pressure-detecting conductive paths 115a-115i,
forming, on the first main surface (122a), a plurality of pressure-detecting auxiliary conductive paths (839a-839i) electrically connected to the first conductive path (113), the pressure-detecting auxiliary conductive paths (839a-839i) each extending from an intersection point of the intersection points to a pressure-sensing area of the pressure-sensing areas (105a-105i) as viewed in the direction perpendicular to the first sheet (811), the pressure-detecting auxiliary conductive paths (839a-839i) each including an overlapping portion with a pressure-detecting conductive path of the pressure-detecting conductive paths (115a-115i) as viewed in the direction perpendicular to the first sheet (811); and
fixing the first sheet (811) and the second sheet (112) to oppose each other with a gap therebetween; disposing a plurality of spacers (117a-117i) between the first sheet (811) and the second sheet (112) to maintain the gap, wherein each of the plurality of spacers (117a-117i) is disposed in the image transmission areas (118, 119) for transmission of the image and is located along a line extending from a corresponding pressure-detecting conductive path of the pressure-detecting conductive paths (115a-115i) as viewed in the direction perpendicular to the first sheet (811), the pressure-sensing areas (105a-105i) being each defined inside the image transmission areas (118, 119) between the portion in which the corresponding one of the spacers (117a - 117i) is provided and the first conductive path (113) as viewed in the direction perpendicular to the first sheet (811);
wherein the first conductive path (113), one of the pressure-detecting auxiliary conductive paths (839a - 839i) and one of the pressure-detecting conductive paths (115a - 115i) corresponding to a pressure-sensing area (105a - 105i), and the second conductive path (114) are configured to form an electric circuit upon pressing of the corresponding pressure-sensing area (105a - 105i) for detection of the pressed pressure-sensing area (105a - 105i).

## Patentansprüche

1. Berührungsfeld (806), **dadurch gekennzeichnet, dass** es aufweist:
eine erste Folie (811);
eine zweite Folie (112), wobei die erste Folie (811) und die zweite Folie (112) einander mit einem Spalt dazwischen gegenüberliegen;
eine Vielzahl von Abstandshaltern (117a-117i), die zwischen der ersten Folie (811) und der zweiten Folie (112) angeordnet sind, um den Spalt aufrechtzuerhalten;
einen ersten leitenden Pfad (113), der auf einer ersten Hauptoberfläche (122a) der ersten Folie (811) ausgebildet ist, wobei die erste Hauptoberfläche (122a) der zweiten Folie (112) gegenüberliegt;
einen zweiten leitenden Pfad (114), der auf einer zweiten Hauptoberfläche (123a) der zweiten Folie (112) ausgebildet ist, wobei die zweite Hauptoberfläche (123a) der ersten Folie (811) gegenüberliegt, wobei der zweite leitende Pfad (114) von dem ersten leitenden Pfad (113) beabstandet ist, wenn in einer Richtung senkrecht zu der ersten Folie (811) betrachtet;
wobei der erste leitende Pfad (113) und der zweite leitende Pfad (114) parallel zueinander sind, wenn in der Richtung senkrecht zur ersten Folie (811) betrachtet;
eine Isolierschicht (840), die zwischen dem ersten leitenden Pfad (113) und dem zweiten leitenden Pfad (114) angeordnet ist;
eine Vielzahl von druckerfassenden leitenden Pfaden (115a-115i), die elektrisch mit dem zweiten leitenden Pfad (114) verbunden und auf der zweiten Hauptoberfläche (123a) ausgebildet sind, wobei die druckerfassenden leitenden Pfade (115a-115i) den ersten leitenden Pfad (113) an Schnittpunkten schneiden, wenn in der Richtung senkrecht zu der ersten Folie (811) betrachtet;
eine Vielzahl von Drucksensorbereichen (105a-105i), die mit den druckerfassenden leitenden Pfaden (115a-115i) verknüpft sind; und
eine Vielzahl von druckerfassenden leitenden Hilfspfaden (839a-839i), die elektrisch mit dem ersten leitenden Pfad (113) verbunden und auf der ersten Hauptoberfläche (122a) ausgebildet sind, wobei sich die druckerfassenden leitenden Hilfspfade (839a-839i) jeweils von einem Schnittpunkt der Schnittpunkte zu einem Drucksensorbereich der Drucksensorbereiche (105a-105i) erstrecken, wenn in der Richtung senkrecht zu der ersten Folie (811) betrachtet, wobei die druckerfassenden leitenden Hilfspfade (839a-839i) jeweils einen überlappenden Abschnitt mit einem druckerfassenden leitenden Pfad der druckerfassenden leitenden Pfade (115a-115i) aufweisen, wenn in der Richtung senkrecht zu der ersten Folie (811) betrachtet;
wobei sowohl die erste Folie (811) als auch die zweite Folie (112) einen Bildübertragungsbereich (118, 119) zur Übertragung eines Bildes und einen umgebenden Bereich (120, 121) außerhalb des Bildübertragungsbereichs (118, 119) aufweist,
jeder der Vielzahl von Abstandshaltern (117a-117i) in den Bildübertragungsbereichen (118, 119) zur Übertragung des Bildes angeordnet ist und entlang einer Linie angeordnet ist, die sich von einem entsprechenden druckerfassenden leitenden Pfad der druckerfassenden leitenden Pfade (115a-115i) erstreckt, wenn in der Richtung senkrecht zu der ersten Folie (811) betrachtet
der erste leitende Pfad (113) an einem äußeren Rand des Bildübertragungsbereichs (118) oder in dem umgebenden Bereich (120) angeordnet ist,
der zweite leitende Pfad (114) in dem umgebenden Bereich (121) angeordnet ist und von dem Bildübertragungsbereich (119) weiter beabstandet ist als der erste leitende Pfad (113), wenn in der Richtung senkrecht zu der ersten Folie (811) betrachtet, und
die Drucksensorbereiche (105a-105i) jeweils innerhalb der Bild-übertragungsbereiche (118, 119) zwischen dem Abschnitt, in dem der entsprechende der Abstandshalter (117a - 117i) vorgesehen ist, und dem ersten leitenden Pfad (113) definiert sind, wenn in der Richtung senkrecht zur ersten Folie (811) betrachtet,
wobei der erste leitende Pfad (113), einer der druckerfassenden leitenden Hilfspfade (839a - 839i) und einer der druckerfassenden leitenden Pfade (115a - 115i), die einem Drucksensorbereich (105a - 105i) entsprechen, und der zweite leitende Pfad (114) eingerichtet sind, beim Drücken des entsprechenden Drucksensorbereichs (105a - 105i) eine elektrische Schaltung zur Erfassung des gedrückten Drucksensorbereichs (105a - 105i) zu bilden.

2. Berührungsfeld (806) nach Anspruch 1, **dadurch gekennzeichnet, dass**
der erste leitende Pfad (113) ein Widerstandselement (944a-944h) zwischen mindestens einem Paar benachbarter druckerfassender leitender Hilfspfade (839a-839i) der Vielzahl der druckerfassenden leitenden Hilfspfade (839a- 839i) aufweist, wenn in der Richtung senkrecht zu der ersten Folie (811) betrachtet.

3. Berührungsfeld (806) nach Anspruch 1 oder 2, **dadurch gekennzeichnet, dass**
jeder der Vielzahl der druckerfassenden leitenden Pfade (115a-115i) an einer anderen Stelle mit dem zweiten leitenden Pfad (114) verbunden ist.

4. Berührungsfeld (806) nach Anspruch 3, **dadurch gekennzeichnet, dass**
der zweite leitende Pfad (114) ein Widerstandselement (1045a-1045h) zwischen mindestens einem Paar benachbarter druckerfassender leitender Pfade (115a-115i) der Vielzahl der druckerfassenden leitenden Pfade (115a-115i) aufweist, wenn in der Richtung senkrecht zu der ersten Folie (811) betrachtet.

5. Berührungsfeld (806) nach Anspruch 1, **dadurch gekennzeichnet, dass**
jeder des ersten leitenden Pfads (213) und des zweiten leitenden Pfads (214) so angeordnet ist, dass er den Bildübertragungsbereich (118, 119) umgibt.

6. Berührungsfeld (806) nach einem der Ansprüche 1 bis 5, **dadurch gekennzeichnet, dass**
der erste leitende Pfad (113), der zweite leitende Pfad (114) und die druckerfassenden leitenden Pfade (115a-115i) aus leitender Tinte gebildet sind.

7. Eingabeeinrichtung (131), **dadurch gekennzeichnet, dass** sie aufweist:
ein Berührungsfeld (806) nach einem der Ansprüche 1 bis 6 und
eine Eingangssignal-Steuereinheit (128), die eingerichtet ist, beim Drücken eines der Vielzahl von Drucksensorbereichen (105a-105i), die mit einem der Vielzahl der druckerfassenden leitenden Pfade (115a-115i) assoziiert sind, den gedrückten Drucksensorbereich (105a-105i) auf der Grundlage eines Widerstandswerts der elektrischen Schaltung zu bestimmen, die durch den ersten leitenden Pfad (113), den zweiten leitenden Pfad (114), den druckerfassenden leitenden Pfad (115a-115i), der dem gedrückten Drucksensorbereich (105a-105i) entspricht, und den druckerfassenden leitenden Hilfspfad (839a-839i), der dem gedrückten Drucksensorbereich (105a-105i) entspricht, gebildet wird.

8. Fernsteuerungseinrichtung (100), aufweisend:
eine Anzeige (104), die eingerichtet ist, ein Bild anzuzeigen; und
eine Eingabeeinrichtung (131) nach Anspruch 7, die mit der Anzeige (104) vorgesehen ist, um zu veranlassen, dass das Bild, das auf der Anzeige (104) angezeigt werden soll, durch die Bildübertragungsbereiche (118, 119) zur Übertragung des Bildes dargestellt wird.

9. Berührungsfeld-Herstellungsverfahren, aufweisend
Ausbilden eines ersten leitenden Pfades (113) auf einer ersten Hauptoberfläche (122a) einer ersten Folie (811);
Ausbilden eines zweiten leitenden Pfades (114) auf einer zweiten Hauptoberfläche (123a) einer zweiten Folie (112), wobei der zweite leitende Pfad (114) von dem ersten leitenden Pfad (113) beabstandet ist, wenn in einer Richtung senkrecht zu der ersten Folie (811) betrachtet, und die erste Folie (811) und die zweite Folie (112) einander gegenüberliegen, wobei sowohl die erste Folie (811) als auch die zweite Folie (112) einen Bildübertragungsbereich (118, 119) zur Übertragung eines Bildes und einen umgebenden Bereich (120, 121) außerhalb des Bildübertragungsbereichs (118, 119) aufweist;
der erste leitende Pfad an einem äußeren Rand des Bildübertragungsbereichs (118) oder in dem umgebenden Bereich (120) angeordnet ist; der zweite leitende Pfad in dem umgebenden Bereich (121) angeordnet ist;
der erste leitende Pfad (113) und der zweite leitende Pfad (114) parallel zueinander angeordnet sind und der zweite leitende Pfad (114) von dem Bildübertragungsbereich (119) weiter beabstandet ist als der erste leitende Pfad (113), wenn in der Richtung senkrecht zu der ersten Folie (811) betrachtet
Aufbringen einer Isolierschicht (840) zwischen dem ersten leitenden Pfad (113) und dem zweiten leitenden Pfad (114);
Ausbilden einer Vielzahl von druckerfassenden leitenden Pfaden (115a-115i) auf der zweiten Hauptoberfläche (123a), wobei die druckerfassenden leitenden Pfade (115a-115i) elektrisch mit dem zweiten leitenden Pfad (114) verbunden sind und den ersten leitenden Pfad (113) an Schnittpunkten schneiden, wenn in der Richtung senkrecht zu der ersten Folie (811) betrachtet
Vordefinieren einer Vielzahl von Drucksensorbereichen (105a-105i), die jeweils mit einem druckerfassenden leitenden Pfad der druckerfassenden leitenden Pfade (115a-115i) verknüpft sind,
Ausbilden, auf der ersten Hauptoberfläche (122a), einer Vielzahl von druckerfassenden leitenden Hilfspfaden (839a-839i), die elektrisch mit dem ersten leitenden Pfad (113) verbunden sind, wobei sich die druckerfassenden leitenden Hilfspfade (839a-839i) jeweils von einem Schnittpunkt der Schnittpunkte zu einem Drucksensorbereich der Drucksensorbereiche (105a-105i) erstrecken, wenn in der Richtung senkrecht zu der ersten Folie (811) betrachtet, wobei die druckerfassenden leitenden Hilfspfade (839a-839i) jeweils einen überlappenden Abschnitt mit einem druckerfassenden leitenden Pfad der druckerfassenden leitenden Pfade (115a-115i) aufweisen, wenn in der Richtung senkrecht zu der ersten Folie (811) betrachtet; und
Befestigen der ersten Folie (811) und der zweiten Folie (112), um einander mit einem Spalt dazwischen gegenüberzuliegen;
Anordnen einer Vielzahl von Abstandshaltern (117a-117i) zwischen der ersten Folie (811) und der zweiten Folie (112), um den Spalt aufrechtzuerhalten, wobei jeder der Vielzahl von Abstandshaltern (117a-117i) in den Bildübertragungsbereichen (118, 119) zur Übertragung des Bildes angeordnet ist und entlang einer Linie angeordnet ist, die sich von einem entsprechenden druckerfassenden leitenden Pfad der druckerfassenden leitenden Pfade (115a-115i) erstreckt, wenn in der Richtung senkrecht zu der ersten Folie (811) betrachtet,
die Drucksensorbereiche (105a-105i) jeweils innerhalb der Bild-übertragungsbereiche (118, 119) zwischen dem Abschnitt, in dem der entsprechende der Abstandshalter (117a - 117i) vorgesehen ist, und dem ersten leitenden Pfad (113) definiert sind, wenn in der Richtung senkrecht zur ersten Folie (811) betrachtet;
wobei
der erste leitende Pfad (113), einer der druckerfassenden leitenden Hilfspfade (839a - 839i) und einer der druckerfassenden leitenden Pfade (115a - 115i), die einem Drucksensorbereich (105a - 105i) entsprechen, und der zweite leitende Pfad (114) eingerichtet ist, beim Drücken des entsprechenden Drucksensorbereichs (105a - 105i) eine elektrische Schaltung zur Erfassung des gedrückten Drucksensorbereichs (105a - 105i) zu bilden.

## Revendications

1. Panneau tactile (806), **caractérisé en ce qu'**il comprend :
une première feuille (811) ;
une seconde feuille (112), la première feuille (811) et la seconde feuille (112) s'opposant l'une à l'autre avec un espace entre elles ;
une pluralité d'entretoises (117a-117i) disposées entre la première feuille (811) et la seconde feuille (112) pour maintenir l'espace ;
un premier trajet conducteur (113) formé sur une première surface principale (122a) de la première feuille (811), la première surface principale (122a) étant opposée à la seconde feuille (112) ;
un second trajet conducteur (114) formé sur une seconde surface principale (123 a) de la seconde feuille (112), la seconde surface principale (123 a) étant opposée à la première feuille (811), le second trajet conducteur (114) étant espacé du premier trajet conducteur (113) lorsqu'ils sont observés dans une direction perpendiculaire à la première feuille (811) ;
le premier trajet conducteur (113) et le second trajet conducteur (114) étant parallèles l'un à l'autre lorsqu'ils sont observés dans la direction perpendiculaire à la première feuille (811) ;
une couche isolante (840) disposée entre le premier trajet conducteur (113) et le second trajet conducteur (114) ;
une pluralité de trajets conducteurs de détection de pression (115a-115i) connectés électriquement au second trajet conducteur (114) et formés sur la seconde surface principale (123a), les trajets conducteurs de détection de pression (115a-115i) coupant le premier trajet conducteur (113) en des points d'intersection lorsqu'ils sont observés dans la direction perpendiculaire à la première feuille (811) ;
une pluralité de zones de détection de pression (105a-105i) associées aux trajets conducteurs de détection de pression (115a-115i) ; et
une pluralité de trajets conducteurs auxiliaires de détection de pression (839a-839i) connectés électriquement au premier trajet conducteur (113) et formés sur la première surface principale (122a), les trajets conducteurs auxiliaires de détection de pression (839a-839i) s'étendant chacun d'un point d'intersection des points d'intersection à une zone de détection de pression des zones de détection de pression (105a-105i) lorsqu'ils sont observés dans la direction perpendiculaire à la première feuille (811), les trajets conducteurs auxiliaires de détection de pression (839a-839i) comprenant chacun une partie de chevauchement avec un trajet conducteur de détection de pression des trajets conducteurs de détection de pression (115a-115i) lorsqu'ils sont observés dans la direction perpendiculaire à la première feuille (811) ;
dans lequel chacune de la première feuille (811) et de la seconde feuille (112) comprend une zone de transmission d'image (118, 119) pour la transmission d'une image et une zone environnante (120, 121) à l'extérieur de la zone de transmission d'image (118, 119),
chacune de la pluralité d'entretoises (117a-117i) est disposée dans les zones de transmission d'image (118, 119) pour la transmission de l'image et est située le long d'une ligne s'étendant à partir d'un trajet conducteur de détection de pression correspondant des trajets conducteurs de détection de pression (115a-115i) lorsqu'elle est observée dans la direction perpendiculaire à la première feuille (811)
le premier trajet conducteur (113) est disposé sur un bord extérieur de la zone de transmission d'image (118) ou dans la zone environnante (120),
le second trajet conducteur (114) est disposé dans la zone environnante (121) et plus éloigné de la zone de transmission d'image (119) que le premier trajet conducteur (113) lorsqu'il est observé dans la direction perpendiculaire à la première feuille (811), et
les zones de détection de pression (105a-105i) sont chacune définies à l'intérieur des zones de transmission d'image (118, 119) entre la partie dans laquelle l'entretoise correspondante des entretoises (117a-117i) est prévue et le premier trajet conducteur (113) lorsqu'elles sont observées dans la direction perpendiculaire à la première feuille (811),
dans lequel le premier trajet conducteur (113), l'un des trajets conducteurs auxiliaires de détection de pression (839a-839i) et l'un des trajets conducteurs de détection de pression (115a-115i) correspondant à une zone de détection de pression (105a-105i), et le second trajet conducteur (114) sont configurés pour former un circuit électrique lors de la pression sur la zone de détection de pression (105a-105i) correspondante pour la détection de la zone de détection de pression (105a-105i) pressée.

2. Panneau tactile (806) selon la revendication 1, **caractérisé en ce que**
le premier trajet conducteur (113) comprend un élément résistif (944a-944h) entre au moins une paire de trajets conducteurs auxiliaires de détection de pression (839a-839i) adjacents de la pluralité de trajets conducteurs auxiliaires de détection de pression (839a-839i) observés dans la direction perpendiculaire à la première feuille (811).

3. Panneau tactile (806) selon la revendication 1 ou 2, **caractérisé en ce que**
chacun de la pluralité des trajets conducteurs de détection de pression (115a-115i) est connecté au second trajet conducteur (114) à une position différente.

4. Panneau tactile (806) selon la revendication 3, **caractérisé en ce que**
le second trajet conducteur (114) comprend un élément résistif (1045a-1045h) entre au moins une paire de trajets conducteurs de détection de pression (115a-115i) adjacents de la pluralité de trajets conducteurs de détection de pression (115a-115i) observés dans la direction perpendiculaire à la première feuille (811).

5. Panneau tactile (806) selon la revendication 1, **caractérisé en ce que**
chacun du premier trajet conducteur (213) et du second trajet conducteur (214) est disposé de manière à entourer la zone de transmission d'images (118, 119).

6. Panneau tactile (806) selon l'une quelconque des revendications 1 à 5, **caractérisé en ce que**
le premier trajet conducteur (113), le second trajet conducteur (114) et les trajets conducteurs de détection de pression (115a-115i) sont formés d'encre conductrice.

7. Dispositif d'entrée (131), **caractérisé en ce qu'**il comprend :
le panneau tactile (806) selon l'une quelconque des revendications 1 à 6 ; et
un dispositif de commande de signaux d'entrée (128) configuré pour déterminer, lors de la pression sur l'une de la pluralité de zones de détection de pression (105a-105i) associées à l'un de la pluralité de trajets conducteurs de détection de pression (115a-115i), la zone de détection de pression (105a-105i) pressée sur la base d'une valeur de résistance du circuit électrique formé par le premier trajet conducteur (113), le second trajet conducteur (114), le trajet conducteur de détection de pression (115a-115i) correspondant à la zone de détection de pression (105a-105i) pressée et le trajet conducteur auxiliaire de détection de pression (839a-839i) correspondant à la zone de détection de pression (105a-105i) pressée.

8. Télécommande (100) comprenant :
un écran (104) configuré pour afficher une image ; et
un dispositif d'entrée (131) selon la revendication 7, équipé de l'écran (104) disposé de façon que l'image à afficher sur l'écran (104) soit présentée par l'intermédiaire des zones de transmission d'image (118, 119) pour la transmission de l'image.

9. Procédé de fabrication d'un panneau tactile, comprenant :
la formation d'un premier trajet conducteur (113) sur une première surface principale (122a) d'une première feuille (811) ;
la formation d'un second trajet conducteur (114) sur une seconde surface principale (123a) d'une seconde feuille (112), le second trajet conducteur (114) étant espacé du premier trajet conducteur (113) lorsqu'il est observé dans une direction perpendiculaire à la première feuille (811), la première feuille (811) et la seconde feuille (112) étant opposées l'une à l'autre, dans lequel chacune de la première feuille (811) et de la seconde feuille (112) comprend une zone de transmission d'image (118, 119) pour la transmission d'une image et une zone environnante (120, 121) à l'extérieur de la zone de transmission d'image (118, 119) ;
le premier trajet conducteur est formé le long d'un bord extérieur de la zone de transmission d'image (118) ou dans la zone environnante (120) ; le second trajet conducteur est formé dans la zone environnante (121) ;
le premier trajet conducteur (113) et le second trajet conducteur (114) sont parallèles l'un à l'autre et le second trajet conducteur (114) est plus éloigné de la zone de transmission d'image (119) que le premier trajet conducteur (113), lorsqu'il est observé dans la direction perpendiculaire à la première feuille (811)
l'application d'une couche isolante (840) entre le premier trajet conducteur (113) et le second trajet conducteur (114) ;
la formation d'une pluralité de trajets conducteurs de détection de pression (115a-115i) sur la seconde surface principale (123a), les trajets conducteurs de détection de pression (115a-115i) étant connectés électriquement au second trajet conducteur (114) et coupant le premier trajet conducteur (113) en des points d'intersection lorsqu'ils sont observés dans la direction perpendiculaire à la première feuille (811) ;
la prédéfinition d'une pluralité de zones de détection de pression (105a-105i), chacune associée à un trajet conducteur de détection de pression parmi les trajets conducteurs de détection de pression (115a-115i),
la formation, sur la première surface principale (122a), d'une pluralité de trajets conducteurs auxiliaires de détection de pression (839a-839i) connectés électriquement au premier trajet conducteur (113), les trajets conducteurs auxiliaires de détection de pression (839a-839i) s'étendant chacun d'un point d'intersection des points d'intersection à une zone de détection de pression des zones de détection de pression (105a-105i) lorsqu'ils sont observés dans la direction perpendiculaire à la première feuille (811), les trajets conducteurs auxiliaires de détection de pression (839a-839i) comprenant chacun une partie de chevauchement avec un trajet conducteur de détection de pression des trajets conducteurs de détection de pression (115a-115i) lorsqu'ils sont observés dans la direction perpendiculaire à la première feuille (811) ; et
la fixation de la première feuille (811) et de la seconde feuille (112) afin qu'elles s'opposent l'une à l'autre avec un espace entre elles ;
la disposition d'une pluralité d'entretoises (117a-117i) entre la première feuille (811) et la seconde feuille (112) pour maintenir l'espace, dans lequel chacune de la pluralité d'entretoises (117a-117i) est disposée dans les zones de transmission d'image (118, 119) pour la transmission de l'image et est située le long d'une ligne s'étendant à partir d'un trajet conducteur de détection de pression correspondant des trajets conducteurs de détection de pression (115a-115i) lorsqu'elle est observée dans la direction perpendiculaire à la première feuille (811),
les zones de détection de pression (105a-105i) étant chacune définies à l'intérieur des zones de transmission d'image (118, 119) entre la partie dans laquelle l'entretoise correspondante des entretoises (117a-117i) est prévue et le premier trajet conducteur (113) lorsqu'elles sont observées dans la direction perpendiculaire à la première feuille (811) ;
dans lequel
le premier trajet conducteur (113), l'un des trajets conducteurs auxiliaires de détection de pression (839a-839i) et l'un des trajets conducteurs de détection de pression (115a-115i) correspondant à une zone de détection de pression (105a-105i), et le second trajet conducteur (114) sont configurés pour former un circuit électrique lors de la pression sur la zone de détection de pression (105a-105i) correspondante pour la détection de la zone de détection de pression (105a-105i) pressée.
